# EUROPÄISCHE PATENTSCHRIFT

(11) **EP 4 681 275 B1**
(45) Veröffentlichungstag und Bekanntmachung des Hinweises auf die Patenterteilung: **13.05.2026**
(21) Anmeldenummer: 24727704.9
(22) Anmeldetag: 16.05.2024
(51) Int. Cl.: H01M 10/643, H01M 10/6557, H01M 50/213, H01M 50/471, H01M 50/242, H01M 10/6569

(54) **BATTERIEGEHÄUSE ZUR AUFNAHME VON EINER VIELZAHL VON BATTERIEKOMPONENTEN, BATTERIE MIT EINEM BATTERIEGEHÄUSE UND BATTERIESYSTEM MIT EINEM KÜHLFLUIDVORRATSBEHÄLTER UND EINER WÄRMETAUSCHEREINRICHTUNG**
BATTERY HOUSING FOR HOLDING A PLURALITY OF BATTERY COMPONENTS, BATTERY COMPRISING A BATTERY HOUSING AND BATTERY SYSTEM COMPRISING A COOLING FLUID RESERVOIR AND A HEAT EXCHANGER DEVICE
BOÎTIER DE BATTERIE DESTINÉ À RECEVOIR UNE PLURALITÉ DE COMPOSANTS DE BATTERIE, BATTERIE DOTÉE D'UN BOÎTIER DE BATTERIE ET SYSTÈME DE BATTERIE COMPRENANT UN RÉSERVOIR DE FLUIDE DE REFROIDISSEMENT ET UN DISPOSITIF D'ÉCHANGEUR DE CHALEUR

(30) Priorität: 16.05.2023 DE 102023112943
(43) Veröffentlichungstag der Anmeldung: 21.01.2026
(73) Patentinhaber: Kautex Textron GmbH & Co. KG, 53229 Bonn (DE)
(72) Erfinder: MIMBERG, Gero, 50968 Köln (DE); HELMIG, Raimund, 48477 Hoerstel (DE); LENZ, Stefan, 51469 Bergisch Gladbach (DE)
(74) Vertreter: Richly & Ritschel Patentanwälte PartG mbB
(86) Internationale Anmeldenummer: PCT/EP2024/063613
(87) Internationale Veröffentlichungsnummer: WO 2024/236152

(56) Entgegenhaltungen:
- JP-A- 2020 513 649
- US-A1- 2010 092 849

## Beschreibung

Die vorliegende Erfindung betrifft ein Batteriegehäuse zur Aufnahme von einer Vielzahl von Batteriekomponenten. Ferne betrifft die vorliegende Erfindung eine Batterie mit einem Batteriegehäuse sowie einem Batteriesystem mit einem Kühlfluidvorratsbehälter und einer Wärmetauschereinrichtung.

In Batterien, insbesondere in Hochleistungsbatterien wie sie beispielsweise als Traktionsbatterien für Kraftfahrzeuge Verwendung finden, werden beim Laden und Entladen hohe Leistungen umgesetzt. Solche Batterien können bereits aktuell mit Spannungen von mehreren hundert Volt betrieben werden. Außerdem können bereits aktuell Lade- und Entladeströme von mehreren hundert Ampere auftreten. Die Anforderungen hinsichtlich der Leistungsaufnahme solcher Batterien werden zukünftig noch weiter steigen. Diese hohen Leistungsaufnahmen führen zu bereits aktuell hohen, und zukünftig noch höheren thermischen Verlusten in der Batterie während Lade- und Entladevorgängen. Um die Batterien vor thermischer Beschädigung zu schützen sowie einen hohen Wirkungsgrad beim Laden und Entladen zu erreichen, ist es wichtig, die Batterien in einem definierten Temperaturbereich zu halten. Dafür muss die Batterie durch Abführung der durch die thermischen Verluste erzeugten Wärmemenge gekühlt werden.

Aus dem Stand der Technik sind unterschiedliche Arten der Kühlung bekannt. Grundlegend können die verschiedenen Arten der Kühlung anhand des Wärmetransportmediums und der Art des Wärmeübergangs zwischen Wärmetransportmedium und Batteriekomponenten unterschieden werden.

Beispielsweise kann eine Flüssigkeitskühlung mit einem von einem flüssigen Wärmetransportmedium durchströmten Wärmeübertrager erfolgen. Der Wärmeübertrager ist meist unter den Batteriekomponenten angeordnet, wobei der Wärmeübertrager über einen Kontaktwärmeübergang wärmeleitfähig mit den Batteriekomponenten verbunden ist. Dabei wird die sensitive Wärmekapazität des flüssigen Wärmetransportmediums verwendet, um von den Batteriekomponenten bzw. der jeweiligen Batterie abgegebene Wärme über eine Temperaturdifferenz aufzunehmen und entweder direkt an die Umgebung oder über einen Klimakreislauf abzugeben. Als Wärmetransportmedium kommen dabei meist elektrisch leitfähige Flüssigkeiten oder Flüssigkeitsgemische zum Einsatz. Nachteilig an diesen Kühlungssystemen ist, dass das Wärmetransportmedium unter keinen Umständen mit den elektrisch leitfähigen Batteriekomponenten in direkten Kontakt treten darf. Dies führt zu hohen Dichtungsanforderungen an das Batteriegehäuse und damit zu einem hohen Fertigungsaufwand für das Batteriegehäuse. Weiterhin nachteilig ist der erhöhte thermische Widerstand des Wärmeübergangs zwischen den Batteriekomponenten und dem Wärmetransportmedium durch den zusätzlich benötigten Wärmeübertrager. Schließlich ist der meist lediglich auf eine Stelle der Batteriekomponenten, zumeist der Boden der Batteriekomponenten, beschränkte Kontaktwärmeübergang zwischen dem Wärmeübertrager und den Batteriekomponenten nachteilig. Dies kann zu einer inhomogenen Temperaturverteilung innerhalb der Batteriekomponenten führen.

Als Weiterentwicklung der Flüssigkeitskühlung mit einem Wärmeübertrager in Kontakt zu den Batteriekomponenten kann das flüssige Wärmetransportmedium durch die Wärmeaufnahme in dem Wärmeübertrager verdampft werden, was zu höheren Wärmeübergängen und durch die Verdampfungsenthalpie zu einer hohen Wärmeaufnahme pro Masse des Wärmetransportmediums führt. Nach einer Kondensation kann das Wärmetransportmedium wieder dem Wärmeübertrager im flüssigen Zustand zugeführt werden. Die nachteiligen hohen Dichtungsanforderungen sowie der nach wie vor erhöhte thermische Widerstand des Wärmeübergangs zwischen den Batteriekomponenten und dem Wärmetransportmedium sowie der lokal beschränkte Wärmeübergang bleiben jedoch bestehen.

Bei einer Kühlung mit Luft als Wärmetransportmedium können die Batteriekomponenten in direktem Kontakt mit dem Wärmetransportmedium stehen und beispielsweise von diesem umströmt werden. Dadurch ist ein zusätzlicher Wärmeübertrager nicht mehr erforderlich. Nachteilig bei diesem Kühlungssystem ist jedoch die beschränkte Wärmeaufnahme durch Luft als Wärmetransportmedium. Die entstehenden Grenzen der Wärmeaufnahme sind für die oben beschriebenen Anforderungen an beispielsweise Hochleistungsbatterien in Kraftfahrzeugen nicht mehr ausreichend.

Schließlich sind Zwei-Phasen Immersionskühlungssysteme als eine aktuelle Entwicklung aus dem Stand der Technik zu nennen. Vergleichbar mit der Verwendung von Luft als Wärmetransportmedium, erfolgt die Kühlung über eine direkte Umströmung der zu kühlenden Komponenten mit einem flüssigen Wärmetransportmedium. Eine wichtige Eigenschaft des flüssigen Wärmetransportmediums ist daher dessen Dielektrizität, da das Wärmetransportmedium in direktem Kontakt mit den Batteriekomponenten steht, d.h. mit elektrisch leitenden und potentialführenden Komponenten. Darüber hinaus kann auch bei dem dielektrischen, flüssigen Wärmetransportmedium neben dem hohen Wärmeübergang durch die direkte Umströmung der zu kühlenden Komponenten dessen Verdampfungsenthalpie und die damit verbundene hohe Wärmeaufnahmekapazität genutzt werden, wenn das Wärmetransportmedium durch den Wärmeeintrag von den zu kühlenden Batteriezellen während des Wärmeüberganges verdampft.

Nachteilig bei solchen Kühlungssystemen ist der häufig hohe technische Aufwand und die zusätzlich benötigten Aggregate zur Realisierung einer aktiven Zirkulation des Wärmetransportmediums im Kühlkreislauf. Dieser zusätzliche Aufwand wirkt sich negativ auf die Gesamteffizienz der Kühlung aus.

Relevanter Stand der Technik ist beispielsweise aus den Dokumenten JP 2020 513649 A und US 2010/092849 A1 bekannt.

Der vorliegenden Erfindung liegt die Aufgabe zugrunde, ein Batteriegehäuse zur Aufnahme von Batteriekomponenten bereitzustellen, welches eine effizientere Kühlung der Batteriekomponenten ermöglicht und dabei gleichzeitig eine verbesserte Torsions- und Biegesteifigkeit aufweist.

Die der vorliegenden Erfindung zugrundeliegende Aufgabe wird durch ein Batteriegehäuse mit den Merkmalen von Anspruch 1 der vorliegenden Erfindung gelöst. Vorteilhafte Ausgestaltungen des Batteriegehäuses sind in den von Anspruch 1 abhängigen Ansprüchen beschrieben.

Im Genaueren wird die der vorliegenden Erfindung zugrundeliegende Aufgabe gelöst durch ein Batteriegehäuse zur Aufnahme einer Vielzahl von Batteriekomponenten, aufweisend eine erste Batteriegehäusekomponente, eine zweite Batteriegehäusekomponente und zumindest einen Batteriekomponentenhalter, der eine Vielzahl von Aufnahmekavitäten zur Aufnahme der Batteriekomponenten aufweist, wobei die Aufnahmekavitäten jeweils eine Innenwandung aufweisen, die sich jeweils von einer ersten Öffnung der jeweiligen Aufnahmekavität zu einer zweiten Öffnung der jeweiligen Aufnahmekavität erstreckt, und wobei der zumindest eine Batteriekomponentenhalter sandwichartig derart zwischen der ersten Batteriegehäusekomponente und der zweiten Batteriegehäusekomponente angeordnet und mit diesen jeweils verbunden ist, dass die jeweiligen ersten Öffnungen jeweils der ersten Batteriegehäusekomponente und die jeweiligen zweiten Öffnungen jeweils der zweiten Batteriegehäusekomponente zugewandt sind. Die Innenwandungen der jeweiligen Aufnahmekavitäten weisen jeweils zumindest eine sich von der ersten Öffnung zur zweiten Öffnung erstreckende Nut auf, so dass bei in die Aufnahmekavität eingesetzter Batteriekomponente jeweils ein sich von der ersten Öffnung der Aufnahmekavität zur zweiten Öffnung der Aufnahmekavität erstreckender Kühlfluidkanal gebildet ist, der von der Nut und der Batteriekomponente beschränkt ist.

Das erfindungsgemäße Batteriegehäuse weist den Vorteil auf, dass das Batteriegehäuse eine verbessert effiziente Kühlung aufweist. In Einbaulage des Batteriegehäuses, beispielsweise in einem Kraftfahrzeug, liegt in dem Batteriegehäuse befindliches Kühlfluid im Bereich zwischen der ersten Batteriegehäusekomponente und dem Batteriekomponentenhalter in flüssiger Phase in einem Reservoir vor. In dem Reservoir weist das Kühlfluid einen Zustand in der Nähe der Siedelinie, vorzugsweise auf der Siedelinie des Kühlfluids auf. Der durch die Nut der Innenwandung einer Aufnahmekavität und einer in der Aufnahmekavität befindlichen Batteriekomponente gebildete Kühlfluidkanal weist eine Einlassöffnung im Bereich der ersten Öffnung der Aufnahmekavität und eine Auslassöffnung im Bereich der zweiten Öffnung der Aufnahmekavität auf. Das in dem Batteriegehäuse vorliegende Kühlfluid steigt durch den im Kühlfluid vorliegenden Druck durch die Einlassöffnung des Kühlfluidkanals in den Kühlfluidkanal entgegen der Schwerkraft auf und nimmt dabei Wärme von der Batteriekomponente auf. Durch die aufgenommene Wärme beginnt das Kühlfluid zu Sieden und verdampft. Das verdampfende Kühlfluid steigt weiter entlang des Kühlfluidkanals auf und nimmt dabei Wärme von der Batteriekomponente auf und tritt aus der Auslassöffnung des Kühlfluidkanals, vorzugsweise noch im Nassdampfgebiet vorliegend, aus. Dadurch, dass das Kühlfluid in direktem Kontakt mit der Batteriekomponente steht, während es durch den Kühlfluidkanal fließt, ist der thermische Widerstand zwischen dem Kühlfluid und der Batteriekomponente reduziert, sodass ein verbesserter Wärmeübergang von der Batteriekomponente zu dem Kühlfluid erreicht ist.

Das erfindungsgemäße Batteriegehäuse weist weiterhin den Vorteil auf, dass das Batteriegehäuse eine gesteigerte Kühlleistung aufweist. Durch den Phasenwechsel des Kühlfluids, während das Kühlfluid durch den Kühlfluidkanal fließt, kann aufgrund der Verdampfungsenthalpie des Kühlfluids eine vergrößerte Wärmemenge bezogen auf die Menge des durch den Kühlfluidkanal fließenden Kühlfluids aufgenommen werden. Ferner weist das erfindungsgemäße Batteriegehäuse eine gleichmäßigere Kühlung auf, da der Phasenwechsel des Kühlfluids isotherm abläuft, sodass eine hohe Temperaturhomogenität innerhalb des Kühlfluids vorliegt.

Schließlich weist das Batteriegehäuse den Vorteil auf, dass das Batteriegehäuse eine verbesserte Torsions- und Biegesteifigkeit aufweist. Dadurch, dass der Batteriekomponentenhalter sandwichartig zwischen der ersten Batteriegehäusekomponente und der zweiten Batteriegehäusekomponente angeordnet und mit diesen verbunden ist, können Schubkräfte verbessert aufgenommen werden, sodass ein torsions- und biegesteifes Batteriegehäuse entsteht. Weiterhin kann die erforderliche Wandstärke der ersten Batteriegehäusekomponente, der zweiten Batteriegehäusekomponente und des Batteriekomponentenhalters zur Abstützung des entstehenden Innendrucks verringert werden.

Die Batteriekomponenten sind vorzugsweise als Batteriezellen ausgebildet. Die Batteriezellen sind vorzugsweise als zylindrische Batteriezellen ausgebildet. Ferner ist es auch möglich, dass die Batteriekomponenten als Batteriemodule ausgebildet sind.

Die erste Batteriegehäusekomponente ist vorzugsweise als Batteriegehäuseschale ausgebildet. Die erste Batteriegehäusekomponente kann auch als Batteriegehäuseunterschale oder allgemein als Unterschale bezeichnet werden.

Die zweite Batteriegehäusekomponente ist vorzugsweise als Batteriegehäuseschale oder als Batteriegehäusedeckel ausgebildet, wobei der Batteriegehäusedeckel ebenfalls als Batteriegehäuseschale ausgebildet sein kann. Die zweite Batteriegehäusekomponente kann auch als Batteriegehäuseoberschale oder allgemein als Oberschaleschale bezeichnet werden.

Der Batteriekomponentenhalter kann auch als Batteriezellenhalter oder als Zellenhalter bezeichnet werden.

Jede Aufnahmekavität ist zur Aufnahme von einer Batteriekomponente ausgelegt. Die Aufnahmekavitäten sind als Durchgangsöffnungen im Batteriekomponentenhalter ausgebildet. Die Aufnahmekavitäten sind vorzugsweise zylinderförmig ausgebildet. Ein freier Querschnitt der Aufnahmekavitäten ist vorzugsweise kreisförmig ausgebildet.

Alternativ sind die Aufnahmekavitäten rechteckig vorzugsweise quadratisch ausgebildet. Ein freier Querschnitt der Aufnahmekavitäten ist vorzugsweise rechteckig und besonders bevorzugt quadratisch ausgebildet.

Die Innenwandung oder Teile der Innenwandung der jeweiligen Aufnahmekavitäten kommen mit einer Batteriekomponente, beispielsweise mit einer Batteriezelle in Kontakt, wenn die Batteriezelle in die Aufnahmekavität eingesetzt ist. Ein derart ausgebildetes Batteriegehäuse weist den Vorteil auf, dass die Batteriekomponenten verbessert, insbesondere verbessert fixiert in dem Batteriegehäuse aufgenommen werden können. Dadurch werden nicht gewünschte Veränderungen der Position der Batteriekomponenten innerhalb des Batteriegehäuses reduziert.

Ein freier Querschnitt der jeweiligen Aufnahmekavitäten ist vorzugsweise kleiner als ein Querschnitt der jeweiligen Batteriekomponenten. Ein derart ausgebildetes Batteriegehäuse weist den Vorteil auf, dass die Batteriekomponenten nochmals verbessert fixiert in dem Batteriegehäuse aufgenommen werden können. Insbesondere wird eine kraftschlüssige Verbindung zwischen der jeweiligen Aufnahmekavität und der in die Aufnahmekavität eingesetzten Batteriekomponente gebildet.

Die jeweiligen Nuten der Innenwandungen erstrecken sich vorzugsweise parallel zu einer Längserstreckung der jeweiligen Aufnahmekavitäten. Die Längserstreckung einer Aufnahmekavität verläuft von der ersten Öffnung zur zweiten Öffnung der Aufnahmekavität.

Die jeweiligen Nuten sind jeweils durchgängig von der jeweiligen ersten Öffnung der jeweiligen Aufnahmekavitäten zu den jeweiligen zweiten Öffnungen der jeweiligen Aufnahmekavitäten ausgebildet.

Die jeweiligen gebildeten Kühlfluidkanäle sind zur Durchleitung eines Kühlfluid ausgebildet.

Die jeweiligen gebildeten Kühlfluidkanäle weisen eine Einlassöffnung im Bereich der ersten Öffnung der Aufnahmekavität und eine Auslassöffnung im Bereich der zweiten Öffnung der Aufnahmekavität auf, wobei ein freier Querschnitt der Einlassöffnung vorzugsweise kleiner als ein freier Querschnitt der Auslassöffnung ausgebildet ist. Ein derart ausgebildetes Batteriegehäuse weist den Vorteil auf, dass das Batteriegehäuse eine verbessert effiziente Kühlung aufweist.

Die Innenwandungen der jeweiligen Aufnahmekavitäten weisen vorzugsweise mehr als eine Nut auf. Ein derart ausgebildetes Batteriegehäuse weist den Vorteil auf, dass das Batteriegehäuse eine nochmals verbesserte Kühlleistung aufweist.

Die Innenwandungen der jeweiligen Aufnahmekavitäten weisen vorzugsweise zumindest zwei, vier, acht, zwölf, vierzehn, sechzehn oder mehr Nuten auf, die sich in Längserstreckung der Aufnahmekavität erstrecken. Weiter vorzugsweise sind die Nuten winkeläquidistant zueinander um eine Längsachse der Aufnahmekavität angeordnet. Die Längsachse der Aufnahmekavität verläuft vorzugsweise durch die Mittelpunkte der freien Querschnitte entlang der Längserstreckung der Aufnahmekavität. Ein derart ausgebildetes Batteriegehäuse weist den Vorteil auf, dass das Batteriegehäuse eine nochmals verbesserte Kühlleistung aufweist und gleichzeitig eine gleichmäßigere Kühlung von Batteriekomponenten aufgrund einer vergrößerten gekühlten Oberfläche der Batteriekomponenten ermöglicht.

Vorzugsweise weisen die Innenwandungen der jeweiligen Aufnahmekavitäten zumindest teilweise gruppiert angeordnete Nuten auf. Zwei oder mehr gruppiert angeordnete Nuten einer Aufnahmekavität weisen einen geringeren Abstand zueinander auf als zu den anderen Nuten der gleichen Aufnahmekavität. Beispielsweise können zwei Nuten in einer Zweiergruppe gruppiert angeordnet sein. Die in einer Zweiergruppe gruppiert angeordneten Nuten weisen einen geringeren Abstand zueinander auf, als zu anderen Nuten der gleichen Aufnahmekavität. Vorzugsweise weisen die Aufnahmekavitäten jeweils sechs in Zweiergruppen gruppiert angeordnete Nuten auf. Alternativ weisen die Aufnahmekavitäten jeweils vier in Dreiergruppen gruppiert angeordnete Nuten auf. Ein derart ausgebildetes Batteriegehäuse weist den Vorteil auf, dass das Batteriegehäuse eine vergrößerte Packungsdichte und ferner eine nochmals verbesserte Torsions- und Biegesteifigkeit aufweist. Gruppiert zueinander angeordnete Nuten können derart in den Innenwandungen der Aufnahmekavitäten angeordnet werden, dass der Batteriekomponentenhalter an jeder Stelle eine hinsichtlich Torsions- und Biegesteifigkeit optimale Materialverteilung aufweist.

Der Batteriekomponentenhalter ist mit der ersten Batteriegehäusekomponente und/oder mit der zweiten Batteriegehäusekomponente vorzugsweise stoffschlüssig, insbesondere durch Verschweißung und/oder Verklebung, verbunden. Ein derart ausgebildetes Batteriegehäuse weist den Vorteil auf, dass das Batteriegehäuse eine verbesserte Torsions- und Biegesteifigkeit aufweist.

Weiter vorzugsweise ist der Batteriekomponentenhalter mit der ersten Batteriegehäusekomponente und/oder mit der zweiten Batteriegehäusekomponente formschlüssig und/oder kraftschlüssig verbunden. Die formschlüssige und/oder kraftschlüssige Verbindung kann als Hintergreifung und/oder als Klemmverbindung ausgebildet sein. Ein derart ausgebildetes Batteriegehäuse weist den Vorteil auf, dass das Batteriegehäuse eine nochmals verbesserte Torsions- und Biegesteifigkeit aufweist.

Vorzugsweise ist das Batteriegehäuse derart ausgebildet, dass die zumindest eine Nut entlang ihrer Längserstreckung eine variierende Nuttiefe aufweist.

Ein derart ausgebildetes Batteriegehäuse weist den Vorteil auf, dass das Batteriegehäuse eine nochmals verbessert effiziente Kühlung aufweist. Während Lade- und Entladevorgängen erzeugen in dem Batteriegehäuse aufgenommene Batteriekomponenten entlang der Längserstreckung der Batteriekomponenten unterschiedlich viel Wärme. Durch die variierende Nuttiefe entlang ihrer Längserstreckung kann ein durch den Kühlfluidkanal fließendes Kühlfluid entlang der Längserstreckung der Batteriekomponente unterschiedliche Wärmemengen aufnehmen, sodass eine bedarfsgerechte und damit verbessert effiziente Kühlung erreicht wird.

Die Nuttiefe ist die Erstreckungsrichtung der Nut, welche sich orthogonal zur Längserstreckung der Nut und ausgehend von einem Mittelpunkt eines freien Querschnitts der Aufnahmekavität radial in Richtung der Innenwandung der Aufnahmekavität erstreckt. Mit anderen Worten vergrößert die Nuttiefe der Nut den freien Querschnitt der Aufnahmekavität in radialer Richtung.

Vorzugsweise weist die zumindest eine Nut entlang ihrer Längserstreckung eine konstante Nutbreite auf. Die Nutbreite erstreckt sich orthogonal zur Längserstreckung der Nut und orthogonal zur Nuttiefe der Nut.

Vorzugsweise ist das Batteriegehäuse derart ausgebildet, dass die Nuttiefe der zumindest einen Nut entlang deren Längserstreckung stufenweise variiert.

Ein derart ausgebildetes Batteriegehäuse weist den Vorteil auf, dass das Batteriegehäuse eine nochmals verbessert effiziente Kühlung aufweist. Der lokale Druck innerhalb des Kühlfluidkanals, welcher durch eine derart ausgebildete Nut und eine in der Aufnahmekavität eingesetzte Batteriekomponente gebildet ist, variiert durch die stufenweise variierende Nuttiefe ebenfalls stufenweise. Der lokale Druck innerhalb des Kühlfluidkanals kann damit stufenweise entlang der Längserstreckung des Kühlfluidkanals über oder unter dem Dampfdruck des Kühlfluids liegen. Dadurch kann die von einem Kühlfluid aufgenommene Wärmemenge entlang der Längserstreckung der Batteriekomponente nochmals verbessert bedarfsgerecht durch Verdampfung des Kühlfluids eingestellt werden. Dadurch kann insbesondere die Wärmeübergangsgeschwindigkeit von der Batteriekomponente auf das Kühlfluid variiert werden, insbesondere gesteigert werden.

Vorzugsweise ist das Batteriegehäuse derart ausgebildet, dass die zumindest eine Nut im Bereich der ersten Öffnung der Aufnahmekavität eine erste Nuttiefe aufweist, die kleiner ist als eine zweite Nuttiefe im Bereich der zweiten Öffnung der Aufnahmekavität.

Ein derart ausgebildetes Batteriegehäuse weist den Vorteil auf, dass das Batteriegehäuse eine nochmals verbessert effiziente Kühlung und gleichzeitig eine nochmals gesteigerte Kühlleistung aufweist. Das Kühlfluid steigt im Bereich der ersten Öffnung der Aufnahmekavität in den Kühlfluidkanal auf. Durch eine zweite Nuttiefe, die größer als die erste Nuttiefe ist, wird durch den Kühlfluidkanal fließendes Kühlfluid beim Übergang von der ersten Nuttiefe zur zweiten Nuttiefe unter Aufnahme von Wärmeenergie von der Batteriekomponente vereinfacht verdampft. Das Kühlfluid wird durch die größere zweite Nuttiefe entspannt, sodass der lokale Druck im Bereich der zweiten Nuttiefe unterhalb des vorliegenden Dampfdrucks liegt.

Vorzugsweise ist das Batteriegehäuse derart ausgebildet, dass die erste Nuttiefe zwischen 0.1 mm und 1 mm, weiter vorzugsweise zwischen 0.2 mm und 0.4 mm und nochmals weiter vorzugsweise 0.3 mm beträgt, und dass die zweite Nuttiefe zwischen 0.5 mm und 2 mm und weiter vorzugsweise 0.8 mm beträgt.

Ein derart ausgebildetes Batteriegehäuse weist den Vorteil auf, dass das Batteriegehäuse eine abermals verbessert effiziente Kühlung aufweist. In Versuchen hat sich gezeigt, dass das Kühlfluid bei einer ersten Nuttiefe zwischen 0.1 mm und 1 mm, vorzugweise bei 0.3 mm, besonders verbessert in den gebildeten Kühlfluidkanal aufsteigt. Ferner hat sich in Versuchen gezeigt, dass bei einer zweiten Nuttiefe im Bereich von 0.6 mm und 1 mm, vorzugsweise bei 0.8 mm, Kühlfluid besonders einfach verdampft. Überaschenderweise hat sich gezeigt, dass die Kombination der Bereiche der ersten Nuttiefe und der zweiten Nuttiefe zu einer abermals verbessert effizienten Kühlung führen. Insbesondere kann im Bereich der ersten Nuttiefe exakt so viel Kühlfluid in den Kühlfluidkanal aufsteigen, wie im Bereich der zweiten Nuttiefe verdampft und den Kühlfluidkanal weiter aufsteigt. Dadurch wird ein konstanter Verdampfungsprozess erreicht.

Vorzugsweise ist das Batteriegehäuse derart ausgebildet, dass die zumindest eine Nut die erste Nuttiefe über eine Längserstreckung von 1 mm bis 8 mm, weiter vorzugsweise von 1 mm bis 5 mm und nochmals weiter vorzugsweise von 2 mm aufweist.

Ein derart ausgebildetes Batteriegehäuse weist den Vorteil auf, dass das Batteriegehäuse eine abermals verbessert effiziente Kühlung und gleichzeitig eine abermals gesteigerte Kühlleistung aufweist. Überaschenderweise hat sich gezeigt, dass durch die Längserstreckung der ersten Nuttiefe im Bereich von 1 mm bis 8 mm, vorzugsweise von 2 mm, die Menge des durch den Kühlfluidkanal fließenden Kühlfluids derart eingestellt ist, dass das Kühlfluid beim Austreten aus der Auslassöffnung des Kühlfluidkanals einen Dampfgehalt im Bereich von 50% aufweist, sodass das Kühlfluid eine nochmals gesteigerte Wärmemenge bezogen auf das durch den Kühlfluidkanal fließende Kühlfluid aufnimmt.

Vorzugsweise ist das Batteriegehäuse derart ausgebildet, dass die Innenwandungen der jeweiligen Aufnahmekavitäten jeweils zumindest eine sich von der ersten Öffnung in Richtung der zweiten Öffnung erstreckende Quetschrippe aufweisen, so dass bei in die Aufnahmekavität eingesetzter Batteriekomponente die Quetschrippe deformiert wird und die Batteriekomponente spielfrei in der Aufnahmekavität gehalten ist.

Ein derart ausgebildetes Batteriegehäuse weist den Vorteil auf, dass das Batteriegehäuse eine nochmals verbessert effiziente Kühlung aufweist. Durch eine spielfrei in der Aufnahmekavität gehaltene Batteriekomponente ist der durch die Batteriekomponente und die Nut gebildete Kühlfluidkanal verbessert gegenüber der Aufnahmekavität abgedichtet, sodass weniger Kühlfluid in die Aufnahmekavität gelangt. Ferner weist ein derart ausgebildetes Batteriegehäuse den Vorteil auf, dass in den Aufnahmekavitäten eingesetzte Batteriekomponenten verbessert in den Aufnahmekavitäten gehalten werden. Dadurch weist das Batteriegehäuse eine verbesserte Torsions- und Biegesteifigkeit auf.

Das Merkmal, dass sich die Quetschrippe von der ersten Öffnung der Aufnahmekavität in Richtung der zweiten Öffnung der Aufnahmekavität erstreckt, kann auch so ausgedrückt werden, dass die Quetschrippe eine Längserstreckung von der ersten Öffnung der Aufnahmekavität in Richtung der zweiten Öffnung der Aufnahmekavität aufweist.

Vorzugsweise weisen die Innenwandungen der jeweiligen Aufnahmekavitäten jeweils drei Quetschrippen oder vier Quetschrippen oder mehr Quetschrippen auf. Die Quetschrippen jeweils einer Aufnahmekavität weisen vorzugsweise einen äquidistanten Abstand zueinander auf. Insbesondere sind die Quetschrippen jeweils einer Aufnahmekavität winkeläquidistant zueinander um die Längsachse der Aufnahmekavität angeordnet.

Ein derart ausgebildetes Batteriegehäuse weist den Vorteil auf, dass das Batteriegehäuse eine nochmals verbessert effiziente Kühlung und gleichzeitig eine verbesserte Torsions- und Biegesteifigkeit aufweist. Durch die drei oder mehr Quetschrippen werden in den Aufnahmekavitäten gehaltene Batteriekomponenten nochmals fester gehalten. Zudem bewirkt die spielfreie Aufnahme der Batteriekomponenten in den Aufnahmekavitäten, dass der Batteriekomponentenhalter selbst steifer wird. Schließlich werden durch die spielfreie Aufnahme Bauteilvibrationen reduziert, insbesondere in dem Fall, dass eine in dem Batteriekomponentenhalter aufgenommene Batteriekomponente den Kontakt zu einer Erhebung verliert.

Vorzugsweise ist das Batteriegehäuse derart ausgebildet, dass sich die zumindest eine Quetschrippe von der ersten Öffnung der Aufnahmekavität über eine Länge von 5 mm bis 15 mm, vorzugsweise von 7 mm in Richtung der zweiten Öffnung der Aufnahmekavität erstreckt.

Ein derart ausgebildetes Batteriegehäuse weist den Vorteil auf, dass das Batteriegehäuse eine abermals verbessert effiziente Kühlung aufweist. In Versuchen hat sich gezeigt, dass eine sich von der ersten Öffnung über eine Länge von 5 mm bis 15 mm, vorzugsweise 7 mm, in Richtung der zweiten Öffnung erstreckende Quetschrippe den Kühlfluidkanal nochmals verbessert gegenüber der Aufnahmekavität abdichtet, sodass nochmals weniger Kühlfluid in die Aufnahmekavität gelangt.

Vorzugsweise ist das Batteriegehäuse derart ausgebildet, dass die zumindest eine Quetschrippe jeweils eine Höhenerstreckung von 0.1 mm bis 0.5 mm, vorzugsweise von 0.3 mm aufweist.

Ein derart ausgebildetes Batteriegehäuse weist den Vorteil auf, dass das Batteriegehäuse eine abermals verbessert effiziente Kühlung und gleichzeitig eine gesteigerte Kühlleistung aufweist. In Versuchen hat sich gezeigt, dass eine Quetschrippe mit einer Höhenerstreckung von 0.1 mm bis 0.5 mm, vorzugsweise von 0.3 mm, den Kühlfluidkanal nochmals verbessert abdichtet. Insbesondere ist der Kühlfluidkanal auch bei gesteigertem lokalen Druck im Kühlfluidkanal verbessert abgedichtet. Dadurch kann eine gesteigerte Menge Kühlfluid durch den Kühlfluidkanal fließen, sodass eine vergrößerte Wärmemenge von der Batteriekomponente an das Kühlfluid übertragen wird.

Die Höhenerstreckung einer Quetschrippe ist die Erstreckungsrichtung der Quetschrippe, welche sich orthogonal zur Längserstreckung der Quetschrippe und ausgehend von der Innenwandung der Aufnahmekavität in Richtung des freien Querschnitts der Aufnahmekavität erstreckt. Mit anderen Worten verkleinert die Höhenerstreckung der Quetschrippe den freien Querschnitt der Aufnahmekavität.

Vorzugsweise ist das Batteriegehäuse derart ausgebildet, dass die Innenwandungen der jeweiligen Aufnahmekavitäten jeweils zumindest eine sich von der zweiten Öffnung in Richtung der ersten Öffnung erstreckende Stabilisatorrippe aufweisen. Vorzugsweise weist die Stabilisatorippe entlang ihrer Längserstreckung beginnend bei der zweiten Öffnung in Richtung der ersten Öffnung eine abnehmende Höhenerstreckung auf.

Ein derart ausgebildetes Batteriegehäuse weist den Vorteil auf, dass das Batteriegehäuse eine abermals verbesserte Torsions- und Biegesteifigkeit aufweist, insbesondere im Bereich der zweiten Öffnungen der Aufnahmekavitäten des Batteriekomponentenhalters.

Vorzugsweise geht die zumindest eine Stabilisatorrippe in die Innenwandung der Aufnahmekavität über. Insbesondere erstreckt sich die zumindest eine Stabilisatorrippe von der zweiten Öffnung in Richtung der ersten Öffnung bis zur Hälfte der Längserstreckung der Aufnahmekavität.

Vorzugsweise ist das Batteriegehäuse derart ausgebildet, dass die erste Batteriegehäusekomponente eine strukturierte Innenauflagefläche mit einer Vielzahl von Erhebungen aufweist, wobei die Vielzahl der Erhebungen der Vielzahl der ersten Öffnungen der jeweiligen Aufnahmekavitäten des zumindest einen Batteriekomponentenhalters gegenüberliegend angeordnet sind, so dass bei in die Aufnahmekavitäten eingesetzten Batteriekomponenten diese auf den jeweiligen Erhebungen aufliegen.

Ein derart ausgebildetes Batteriegehäuse weist den Vorteil auf, dass das Batteriegehäuse eine nochmals verbessert effiziente Kühlung aufweist. Dadurch, dass in die Aufnahmekavitäten eingesetzte Batteriekomponenten auf den Erhebungen aufliegen, wird eine Blasenbildung des Kühlfluids beim Eintreten des Kühlfluids durch die Einlassöffnung des Kühlfluidkanals vermieden, sodass der Wärmeübergangskoeffizient zwischen dem Kühlfluid und der Batteriekomponente verbessert ist.

Die strukturierte Innenauflagefläche ist dazu ausgebildet, dass ein flüssiges Kühlfluid zwischen den Erhebungen der Innenauflagefläche aufgenommen werden kann, sodass das flüssige Kühlfluid ein zusammenhängendes Reservoir bildet. Die Erhebungen sind vorzugsweise derart ausgebildet, dass die Erhebungen aus dem Reservoir des flüssigen Kühlfluids herausragen, sodass auf den Erhebungen aufliegende Batteriekomponenten nicht mit in dem Reservoir befindlichen Kühlfluid in direkten Kontakt gelangen.

Vorzugsweise ragen die Erhebungen von einer Grundfläche der ersten Batteriegehäusekomponente in ein Aufnahmevolumen des Batteriegehäuses, wobei die Erhebungen eine Längserstreckung in einem Bereich von 1 mm bis 8 mm, vorzugsweise 4 mm aufweisen. Ein derart ausgebildetes Batteriegehäuse weist den Vorteil auf, dass das Batteriegehäuse eine stets ausreichende Menge an flüssigem Kühlfluid in dem Aufnahmevolumen des Batteriegehäuses aufweist, sodass ein kontinuierlicher Verdampfungsprozess des Kühlfluids erreicht wird. Dadurch wird eine nochmals verbessert effiziente Kühlung des Batteriegehäuses erreicht.

In Einbaulage des Batteriegehäuses, beispielsweise in ein Kraftfahrzeug, verläuft die Grundfläche der ersten Batteriegehäusekomponente in der horizontalen Ebene.

Die Längserstreckung der Erhebungen verläuft ausgehend von der Grundfläche der ersten Batteriegehäusekomponente orthogonal in das Aufnahmevolumen des Batteriegehäuses.

Vorzugsweise sind die Erhebungen zylinderförmig ausgebildet. Alternativ weisen die Erhebungen eine der Querschnittsfläche der Batteriekomponenten entsprechende Querschnittsfläche auf.

Vorzugsweise weisen die Erhebungen jeweils einen geringeren Durchmesser als die Aufnahmekavitäten auf. Ein derart ausgebildetes Batteriegehäuse weist den Vorteil auf, dass Kühlfluid, welches in der strukturierten Innenauflagefläche aufgenommen ist und ein Reservoir bildet, verbessert durch die Einlassöffnung des Kühlfluidkanals in den Kühlfluidkanal eintreten kann.

Vorzugsweise weist die erste Batteriegehäusekomponente eine Vielzahl von Verbindungserhebungen auf, die sich von der Grundfläche der ersten Batteriegehäusekomponente in das Aufnahmevolumen des Batteriegehäuses erstrecken. Die Verbindungserhebungen sind vorzugsweise zylinderförmig ausgebildet. Die Verbindungserhebungen sind vorzugsweise jeweils an drei Erhebungen angrenzend angeordnet. Die Verbindungserhebungen weisen vorzugsweise einen kleineren Querschnitt als die Erhebungen auf. Die Verbindungserhebungen der ersten Batteriegehäusekomponenten sind dazu ausgebildet, eine Verbindung, vorzugsweise eine stoffschlüssige Verbindung, mit dem Batteriekomponentenhalter auszubilden.

Ein derart ausgebildetes Batteriegehäuse weist den Vorteil auf, dass das Batteriegehäuse eine verbesserte Torsions- und Biegesteifigkeit aufweist.

Vorzugsweise ist das Batteriegehäuse derart ausgebildet, dass die erste Batteriegehäusekomponente eine umlaufende Innenwandkontur aufweist, die einer Außenwandkontur des zumindest einen Batteriekomponentenhalters entspricht, wobei der zumindest eine Batteriekomponentenhalter mit der ersten Batteriegehäusekomponente derart verbunden ist, dass sich die Außenwandkontur des zumindest einen Batteriekomponentenhalters an die Innenwandkontur der ersten Batteriegehäusekomponente anschmiegt.

Ein derart ausgebildetes Batteriegehäuse weist den Vorteil auf, dass das Batteriegehäuse eine nochmals verbesserte Torsions- und Biegesteifigkeit aufweist. Dadurch, dass sich die Innenwandkontur der ersten Batteriegehäusekomponente an die Außenwandkontur des Batteriekomponentenhalters anschmiegt, entsteht eine zusätzliche formschlüssige Verbindung zwischen dem Batteriekomponentenhalter und der ersten Batteriegehäusekomponente.

Vorzugsweise weist die zweite Batteriegehäusekomponente eine umlaufende Innenwandkontur auf, die der Außenwandkontur des zumindest einen Batteriekomponentenhalters entspricht. Vorzugsweise ist der zumindest eine Batteriekomponentenhalter mit der zweiten Batteriegehäusekomponente derart verbunden, dass sich die Außenwandkontur des zumindest einen Batteriekomponentenhalters an die Innenwandkontur der zweiten Batteriegehäusekomponente anschmiegt.

Ein derart ausgebildetes Batteriegehäuse weist den Vorteil auf, dass das Batteriegehäuse eine nochmals verbesserte Torsions- und Biegesteifigkeit aufweist. Dadurch, dass sich die Innenwandkontur auch der zweiten Batteriegehäusekomponente an die Außenwandkontur des Batteriekomponentenhalters anschmiegt, entsteht eine nochmals verbesserte zusätzliche formschlüssige Verbindung zwischen dem Batteriekomponentenhalter und der zweiten Batteriegehäusekomponente.

Vorzugsweise ist das Batteriegehäuse derart ausgebildet, dass der Batteriekomponentenhalter mit der ersten Batteriegehäusekomponente und/oder mit der zweiten Batteriegehäusekomponente mittels Verschweißung und/oder Verklebung stoffschlüssig verbunden ist.

Ein derart ausgebildetes Batteriegehäuse weist den Vorteil auf, dass das Batteriegehäuse eine verbesserte Torsions- und Biegesteifigkeit aufweist.

Vorzugsweise ist das Batteriegehäuse derart ausgebildet, dass der Batteriekomponentenhalter mit der ersten Batteriegehäusekomponente und/oder mit der zweiten Batteriegehäusekomponente zusätzlich formschlüssig und/oder kraftschlüssig verbunden ist.

Ein derart ausgebildetes Batteriegehäuse weist den Vorteil auf, dass das Batteriegehäuse eine nochmals verbesserte Torsions- und Biegesteifigkeit aufweist.

Vorzugsweise ist der Batteriekomponentenhalter mit der ersten Batteriegehäusekomponente und/oder der zweiten Batteriegehäusekomponente mittels einer Hintergreifung und/oder einer Klemmverbindung und/oder einer Verschraubung zusätzlich formschlüssig und/oder kraftschlüssig verbunden.

Eine Hintergreifung und/oder Klemmverbindung weisen jeweils zumindest zwei zueinander korrespondierende Verbindungsmittel auf. Zwei zueinander korrespondierende Verbindungsmittel sind dazu ausgebildet miteinander in Verbindung gebracht zu werden und diese Verbindung kraftschlüssig und/oder formschlüssig aufrecht zu erhalten.

Eine Klemmverbindung kann als eine Zapfen-Nut-Verbindung ausgebildet sein. Eine Zapfen-Nut-Verbindung weist zumindest einen Zapfen, vorzugsweise eine zylinderförmigen Zapfen, und eine zu dem Zapfen korrespondierende Aufnahmenut auf. Ein Querschnitt des Zapfens kann größer als ein freier Querschnitt der korrespondierenden Aufnahmenut ausgebildet sein, sodass eine Quetschverbindung zwischen dem Zapfen und der Aufnahmenut ausgebildet ist, wenn der Zapfen und der Aufnahmenut aufgenommen ist.

Der Zapfen kann in seinem oberen Bereich konisch zulaufen. Dadurch kann der Zapfen vereinfacht in die korrespondierende Aufnahmenut aufgenommen werden.

Der zylinderförmige Zapfen kann eine um den Umfang des Zapfens umlaufende Zapfennut aufweisen und die Aufnahmenut kann einen Hinterschnitt aufweisen. Die Aufnahmenut ist vorzugsweise dazu eingerichtet, den in der Aufnahmenut aufgenommenen Zapfen im Bereich der Zapfennut zu hintergreifen. Der Querschnitt des Zapfens kann kleiner als der freie Querschnitt der korrespondierenden Aufnahmenut ausgebildet sein. Eine derart ausgebildete Zapfen-Nut-Verbindung kann auch als Hintergreifung bezeichnet werden.

Vorzugsweise ist eines der zueinander korrespondierenden Verbindungsmittel einer Hintergreifung und/oder einer Klemmverbindung monolithisch mit dem Batteriekomponentenhalter ausgebildet. Das jeweils zugehörige korrespondierende Verbindungsmittel ist vorzugsweise monolithisch mit der ersten Batteriegehäusekomponente und/oder mit der zweiten Batteriegehäusekomponente ausgebildet.

Zwei monolithisch miteinander verbundene Bauteile sind aus dem gleichen Bauteil hergestellt und insbesondere fugenlos miteinander verbunden.

Ein derart ausgebildetes Batteriegehäuse weist den Vorteil auf, dass das Batteriegehäuse eine verbessert effiziente Recyclingfähigkeit bei gleichzeitig nochmals verbesserter Torsions- und Biegesteifigkeit aufweist. Dadurch, dass die Verbindungsmittel integraler Bestandteil des Batteriekomponentenhalters und/oder der ersten Batteriegehäusekomponente und/oder der zweiten Batteriegehäusekomponente sind, weist das Batteriegehäuse eine nochmals geringere Anzahl von verschiedenen Materialien auf und weist dadurch eine verbessert effiziente Recyclingfähigkeit auf. Beispielsweise kann das Batteriegehäuse nach Entfernung der Batteriekomponenten und der weiteren elektrischen Bestandteile in einem Stück mechanisch zerkleinert werden und beispielsweise zu Kunststoffrecyclat weiterverarbeitet werden.

Vorzugsweise ist der Batteriekomponentenhalter mit der ersten Batteriegehäusekomponente und/oder der zweiten Batteriegehäusekomponente mittels einer Verschraubung zusätzlich formschlüssig und/oder kraftschlüssig verbunden. Vorzugsweise weist die Verschraubung Federscheiben auf, die in der ersten Batteriegehäusekomponente und/oder der zweiten Batteriegehäusekomponente angeordnet sind. Vorzugsweise sind die Federscheiben zumindest teilweise von Material der ersten Batteriegehäusekomponente und/oder von Material der zweiten Batteriegehäusekomponente umschlossen.

Vorzugsweise weisen die erste Batteriegehäusekomponente und/oder die zweite Batteriegehäusekomponente zumindest einen Gewindeeinsatz auf, der teilweise von Material der ersten Batteriegehäusekomponente und/oder der zweiten Batteriegehäusekomponente umschlossen ist. Insbesondere ist der zumindest eine Gewindeeinsatz als Einlegeteil ausgebildet. Ein Einlegeteil wird während der Herstellung der ersten Batteriegehäusekomponente und/oder der zweiten Batteriegehäusekomponente mit der ersten Batteriegehäusekomponente und/oder der zweiten Batteriegehäusekomponente integral ausgebildet, insbesondere in einem Spritzgussprozess oder einem Fließpressprozess von Material der ersten Batteriegehäusekomponente und/oder der zweiten Batteriegehäusekomponente umschlossen.

Ein derart ausgebildetes Batteriegehäuse weist den Vorteil auf, dass das Batteriegehäuse kostengünstiger herstellbar ist. Insbesondere ist/sind die erste Batteriegehäusekomponente und/oder die zweite Batteriegehäusekomponente in einem Fertigungsschritt herstellbar.

Vorzugsweise ist/sind der Batteriekomponentenhalter und/oder die erste Batteriegehäusekomponente und/oder die zweite Batteriegehäusekomponente als Spritzgussbauteil ausgebildet.

Ein derart ausgebildetes Batteriegehäuse weist den Vorteil auf, dass das Batteriegehäuse kostengünstiger herstellbar ist und gleichzeitig im Spritzgussprozess mit zusätzlichen Funktionen ausgestatten werden kann.

Vorzugsweise weisen der Batteriekomponentenhalter und/oder die erste Batteriegehäusekomponente und/oder die zweite Batteriegehäusekomponente das gleiche Material auf oder sind aus dem gleichen Material gebildet.

Ein derart ausgebildetes Batteriegehäuse weist den Vorteil auf, dass das Batteriegehäuse eine nochmals verbessert effiziente Recyclingfähigkeit aufweist.

Vorzugsweise ist das Batteriegehäuse derart ausgebildet, dass das Batteriegehäuse zumindest einen Kühlfluidzulauf zum Zuführen eines Kühlfluids in ein Aufnahmevolumen des Batteriegehäuses aufweist, und das Batteriegehäuse zumindest einen Kühlfluidablauf zum Ausführen des Kühlfluids aus dem Aufnahmevolumen des Batteriegehäuses aufweist. Der zumindest eine Kühlfluidzulauf steht mit den jeweiligen ersten Öffnungen des zumindest einen Batteriekomponentenhalters in Fluidverbindung, und der zumindest eine Kühlfluidablauf steht mit den jeweiligen zweiten Öffnungen des zumindest einen Batteriekomponentenhalters in Fluidverbindung.

Ein derart ausgebildetes Batteriegehäuse weist den Vorteil auf, dass das Batteriegehäuse eine verbessert effiziente Kühlung aufweist. Verdampftes Kühlfluid kann aus der zweiten Öffnung durch den Kühlfluidablauf aus dem Aufnahmevolumen des Batteriegehäuses geführt werden und außerhalb des Batteriegehäuses die aufgenommene Wärme in beispielsweise einer Wärmetauschereinrichtung unter Verflüssigung abgeben. Das flüssige Kühlfluid kann durch den Kühlfluidzulauf zurück in das Aufnahmevolumen des Batteriegehäuses geführt werden und durch die erste Öffnung des Batteriekomponentenhalters wieder zur Kühlung von in dem Batteriekomponentenhalter eingesetzten Batteriekomponenten geführt werden. Dadurch wird ein geschlossener Kühlkreislauf erreicht und damit eine verbessert effiziente Kühlung.

Der Kühlfluidzulauf und/oder der Kühlfluidablauf ist/sind vorzugsweise als Hohlzylinder ausgebildet, insbesondere als Stutzen. Weiter vorzugsweise ist/sind der Kühlfluidablauf und/oder der Kühlfluidzulauf als Einlegeteil ausgebildet und mit der ersten Batteriegehäusekomponente und/oder der zweiten Batteriegehäusekomponente formschlüssig und/oder kraftschlüssig verbunden. Vorzugsweise ist/sind der Kühlfluidzulauf und/oder der Kühlfluidablauf von Material der ersten Batteriegehäusekomponente und/oder der zweiten Batteriegehäusekomponente zumindest teilweise umschlossen.

Ein derart ausgebildetes Batteriegehäuse weist den Vorteil auf, dass das Batteriegehäuse vereinfacht hergestellt werden kann.

In Einbaulage des Batteriegehäuses, beispielsweise in ein Kraftfahrzeug, ist eine Längserstreckung des Kühlfluidzulaufs in horizontaler Richtung ausgebildet und/oder eine Längserstreckung des Kühlfluidablaufs in vertikaler Richtung ausgebildet.

In Einbaulage des Batteriegehäuses, beispielsweise in ein Kraftfahrzeug ist die erste Batteriegehäusekomponente vorzugsweise unterhalb der zweiten Batteriegehäusekomponente angeordnet. Mit anderen Worten ist die erste Batteriegehäusekomponente in Einbaulage des Batteriegehäuses in ein Kraftfahrzeug vorzugsweise näher an einem Untergrund, beispielsweise einer Straße, angeordnet als die zweite Batteriegehäusekomponente.

Eine Kühlfluidablauföffnung des Kühlfluidablaufs ist in Einbaulage des Batteriegehäuses, beispielsweise in ein Kraftfahrzeug, vorzugsweise einem Untergrund, beispielsweise einer Straße, gegenüberliegend angeordnet.

In Einbaulage des Batteriegehäuses, beispielsweise in einem Kraftfahrzeug, ist der Kühlfluidzulauf vorzugsweise unterhalb des Kühlfluidablaufs angeordnet. Beispielsweise ist der Kühlfluidzulauf in Einbaulage des Batteriegehäuses in einem unteren Bereich des Batteriegehäuses, insbesondere in einem unteren Drittel des Batteriegehäuses und der der Kühlfluidablauf vorzugsweise in einem oberen Bereich des Batteriegehäuses, vorzugsweise in einem oberen Drittel des Batteriegehäuses, angeordnet.

Ein derart ausgebildetes Batteriegehäuse weist den Vorteil auf, dass das Batteriegehäuse eine nochmals verbessert effiziente Kühlung aufweist. Dadurch, dass der Kühlfluidzulauf unterhalb des Kühlfluidablaufs angeordnet ist, kann der gesamte Kühlkreislauf ohne eine Kühlfluidförderpumpe gestaltet werden.

Vorzugsweise weist das Batteriegehäuse zumindest eine Durchgangsöffnung auf, wobei die Durchgangsöffnung dazu ausgebildet ist, eine Stromleitung und/oder eine Datenleitung und/oder eine Fluidleitung aufzunehmen. Die Stromleitung und/oder die Datenleitung und/oder die Fluidleitung kann sich von dem Aufnahmevolumen des Batteriegehäuses durch die Durchgangsöffnung aus dem Aufnahmevolumen des Batteriegehäuses heraus erstrecken.

Vorzugsweise ist die zumindest eine Durchgangsöffnung an der ersten Batteriegehäusekomponente angeordnet. Vorzugsweise ist die Durchgangsöffnung integraler Bestandteil des Batteriegehäuses und/oder der ersten Batteriegehäusekomponente.

Ein derart ausgebildetes Batteriegehäuse weist den Vorteil auf, dass das Batteriegehäuse vereinfacht hergestellt werden kann, insbesondere in einem Fertigungsschritt hergestellt werden kann.

Vorzugsweise ist das Batteriegehäuse derart ausgebildet, dass der zumindest eine Kühlfluidzulauf und/oder der zumindest eine Kühlfluidablauf in der ersten Batteriegehäusekomponente ausgebildet ist/sind.

Ein derart ausgebildetes Batteriegehäuse weist den Vorteil auf, dass das Batteriegehäuse nochmals kosteneffizienter hergestellt werden kann. Insbesondere kann die erste Batteriegehäusekomponente in einem Fertigungsschritt hergestellt werden.

In Einbaulage des Batteriegehäuses, beispielsweise in einem Kraftfahrzeug, ist der Kühlfluidzulauf in einem unteren Bereich der ersten Batteriegehäusekomponente, insbesondere in einem unteren Drittel der ersten Batteriegehäusekomponente und der Kühlfluidablauf vorzugsweise in einem oberen Bereich der ersten Batteriegehäusekomponente, vorzugsweise in einem oberen Drittel der ersten Batteriegehäusekomponente, angeordnet.

Der vorliegenden Erfindung liegt außerdem die Aufgabe zugrunde eine Batterie bereitzustellen, welche eine verbessert effiziente Kühlung und dabei gleichzeitig eine verbesserte Torsions- und Biegesteifigkeit aufweist.

Diese der vorliegenden Erfindung zugrundeliegende Aufgabe wird durch eine Batterie mit einem zuvor beschriebenen Batteriegehäuse gelöst.

Im Genaueren wird die der vorliegenden Erfindung zugrundeliegende Aufgabe gelöst durch eine Batterie mit einem zuvor beschriebenen Batteriegehäuse und mit einer Vielzahl von als Batteriezellen und/oder als Batteriemodule ausgebildeter Batteriekomponenten, die in den Aufnahmekavitäten des zumindest einen Batteriekomponentenhalters eingesetzt sind.

Die erfindungsgemäße Batterie weist den Vorteil auf, dass die Batterie eine verbessert effiziente Kühlung und gleichzeitig eine verbesserte Torsions- und Biegesteifigkeit aufweist.

Der vorliegenden Erfindung liegt außerdem die Aufgabe zugrunde, ein Batteriesystem bereitzustellen, welche eine verbessert effiziente Kühlung und dabei gleichzeitig eine verbesserte Torsions- und Biegesteifigkeit aufweist.

Diese der vorliegenden Erfindung zugrundeliegende Aufgabe wird durch ein Batteriesystem aufweisend eine Batterie mit einem Batteriegehäuse und mit einer Vielzahl von als Batteriezellen und/oder als Batteriemodule ausgebildeter Batteriekomponenten, die in den Aufnahmekavitäten des zumindest einen Batteriekomponentenhalters eingesetzt sind, gelöst. Das Batteriegehäuse weist eine erste Batteriegehäusekomponente, eine zweite Batteriegehäusekomponente und zumindest einen Batteriekomponentenhalter auf, der eine Vielzahl von Aufnahmekavitäten zur Aufnahme der Batteriekomponenten aufweist, wobei die Aufnahmekavitäten jeweils eine Innenwandung aufweisen, die sich jeweils von einer ersten Öffnung der jeweiligen Aufnahmekavität zu einer zweiten Öffnung der jeweiligen Aufnahmekavität erstreckt, und wobei der zumindest eine Batteriekomponentenhalter sandwichartig derart zwischen der ersten Batteriegehäusekomponente und der zweiten Batteriegehäusekomponente angeordnet und mit diesen jeweils verbunden ist, dass die jeweiligen ersten Öffnungen jeweils der ersten Batteriegehäusekomponente und die jeweiligen zweiten Öffnungen jeweils der zweiten Batteriegehäusekomponente zugewandt sind. Die Innenwandungen der jeweiligen Aufnahmekavitäten weisen jeweils zumindest eine sich von der ersten Öffnung zur zweiten Öffnung erstreckende Nut auf, so dass bei in die Aufnahmekavität eingesetzter Batteriekomponente jeweils ein sich von der ersten Öffnung der Aufnahmekavität zur zweiten Öffnung der Aufnahmekavität erstreckender Kühlfluidkanal gebildet ist, der von der Nut und der Batteriekomponente beschränkt ist. Das Batteriegehäuse weist zumindest einen Kühlfluidzulauf zum Zuführen eines Kühlfluids in ein Aufnahmevolumen des Batteriegehäuses und zumindest einen Kühlfluidablauf zum Ausführen des Kühlfluids aus dem Aufnahmevolumen des Batteriegehäuses auf. Der zumindest eine Kühlfluidzulauf steht mit den jeweiligen ersten Öffnungen des zumindest einen Batteriekomponentenhalters in Fluidverbindung, und der zumindest eine Kühlfluidablauf steht mit den jeweiligen zweiten Öffnungen des zumindest einen Batteriekomponentenhalters in Fluidverbindung. Das Batteriesystem weist einen Kühlfluidvorratsbehälter, der mit dem zumindest einen Kühlfluidzulauf über eine Fluidzulaufleitung zum Zuführen von Kühlfluid in das Aufnahmevolumen des Batteriegehäuses fluidverbunden ist, und eine Wärmetauschereinrichtung, die mittels einer Fluidablaufleitung zum Ausführen des Kühlfluids aus dem Aufnahmevolumen des Batteriegehäuses mit dem zumindest einen Kühlfluidablauf fluidverbunden ist auf, wobei die Wärmetauschereinrichtung mit dem Kühlfluidvorratsbehälter zum Zuführen von flüssigem Kühlfluid fluidverbunden ist.

Das erfindungsgemäße Batteriesystem weist den Vorteil auf, dass das Batteriesystem eine verbessert effiziente Kühlung aufweist. In Einbaulage des Batteriesystems, beispielsweise in einem Kraftfahrzeug, fließt flüssiges Kühlfluid von dem Kühlfluidvorratsbehälter durch die Fluidzulaufleitung und den Kühlfluidzulauf in das Aufnahmevolumen des Batteriegehäuses. Das flüssige Kühlfluid liegt im Bereich zwischen der ersten Batteriegehäusekomponente und dem Batteriekomponentenhalter in einem Reservoir vor. In dem Reservoir weist das Kühlfluid einen Zustand in der Nähe der Siedelinie, vorzugsweise auf der Siedelinie des Kühlfluids auf. Der durch die Nut der Innenwandung einer Aufnahmekavität und einer in der Aufnahmekavität befindlichen Batteriekomponente gebildete Kühlfluidkanal weist eine Einlassöffnung im Bereich der ersten Öffnung der Aufnahmekavität und eine Auslassöffnung im Bereich der zweiten Öffnung der Aufnahmekavität auf. Das in dem Batteriegehäuse vorliegende Kühlfluid steigt durch den im Kühlfluid vorliegenden Druck durch die Einlassöffnung des Kühlfluidkanals in den Kühlfluidkanal entgegen der Schwerkraft auf und nimmt dabei Wärme von der Batteriekomponente auf. Durch die aufgenommene Wärme beginnt das Kühlfluid zu Sieden und verdampft. Das verdampfende Kühlfluid steigt weiter entlang des Kühlfluidkanals unter kontinuierlicher Wärmeaufnahme von der Batteriekomponente auf und tritt aus der Auslassöffnung des Kühlfluidkanals vorzugsweise mit einem Dampfgehalt im Bereich von 50% aus. Der Nassdampf tritt durch den Kühlfluidablauf aus dem Aufnahmevolumen des Batteriegehäuses aus und gelangt durch die Fluidablaufleitung zu der Wärmetauschereinrichtung. Das verdampfte Kühlfluid gibt in der Wärmetauschereinrichtung die von den in dem Batteriekomponentenhalter angeordneten Batteriekomponenten aufgenommene Wärme ab und wird dabei wieder verflüssigt. Das verflüssigte Kühlfluid gelangt von der Wärmetauschereinrichtung wieder zum Kühlfluidvorratsbehälter. Dieser sich einstellende Kreisprozess ermöglicht eine verbessert effiziente Kühlung von in dem Batteriekomponentenhalter eingesetzten Batteriekomponenten. Insbesondere kann auf eine Kühlfluidförderpumpe verzichtet werden.

Vorzugsweise ist die Wärmetauschereinrichtung mit dem Kühlfluidvorratsbehälter über eine Vorratsfluidzulaufleitung fluidverbunden.

Vorzugsweise weist das Batteriesystem zumindest eine Kühlfluidförderpumpe, bevorzugt exakt eine Kühlfluidförderpumpe, zum Fördern von Kühlfluid auf. Die Kühlfluidförderpumpe ist vorzugsweise zwischen dem Kühlfluidvorratsbehälter und dem Batteriegehäuse, vorzugsweise in der Fluidzulaufleitung, angeordnet. Vorzugsweise ist die zumindest eine Kühlfluidförderpumpe zwischen der Wärmetauschereinrichtung und dem Kühlfluidvorratsbehälter, vorzugsweise in der Vorratsfluidzulaufleitung, angeordnet.

Ein derart ausgebildetes Batteriesystem weist den Vorteil auf, dass das Batteriesystem eine gesteigerte Kühlleistung und gleichzeitig eine verbessert robuste Kühlung aufweist. Durch die Kühlfluidförderpumpe kann eine größere Menge von Kühlfluid durch das Batteriegehäuse gefördert werden, sodass eine größere Wärmemenge aus dem Batteriegehäuse abgeführt werden kann.

Die Wärmetauschereinrichtung ist vorzugsweise derart ausgebildet, dass ein durch die Wärmetauschereinrichtung fließendes Kühlfluid Wärme an die Umgebung abgibt.

Alternativ oder zusätzlich weist das Batteriesystem einen Klimakreislauf auf, wobei der Klimakreislauf dazu eingerichtet ist, Wärme von einem durch die Wärmetauschereinrichtung fließenden Kühlfluid aufzunehmen.

Ein derart ausgebildetes Batteriesystem weist den Vorteil auf, dass das Batteriesystem eine nochmals gesteigerte Kühlleistung aufweist. Durch den Klimakreislauf kann ein durch die Wärmetauschereinrichtung fließendes Kühlfluid in der Wärmetauschereinrichtung unabhängig von den Umgebungsbedingungen Wärme an den Klimakreislauf abgeben. Dadurch weist ein derart ausgebildetes Batteriesystem einen vergrößerten Temperatureinsatzbereich auf.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine Explosionsdarstellung eines Batteriegehäuses gemäß einer ersten Ausführungsform;
- Figur 2:: eine Schnittdarstellung eines Batteriekomponentenhalters im Bereich einer Aufnahmekavität eines Batteriegehäuses gemäß einer zweiten Ausführungsform;
- Figur 3:: eine perspektivische Darstellung eines Batteriekomponentenhalters eines Batteriegehäuses im Bereich einer Aufnahmekavität gemäß einer dritten Ausführungsform;
- Figur 4:: ein Batteriekomponentenhalter eines Batteriegehäuses gemäß einer vierten Ausführungsform in einer Draufsicht auf die zweiten Öffnungen der Aufnahmekavitäten;
- Figur 5:: ein Batteriekomponentenhalter eines Batteriegehäuses gemäß einer fünften Ausführungsform im Bereich einer Aufnahmekavität in einer Draufsicht auf die erste Öffnung der Aufnahmekavität;
- Figur 6:: eine perspektivische Darstellung eines in eine erste Batteriegehäusekomponente eingesetzten Batteriekomponentenhalters eines Batteriegehäuses gemäß einer sechsten Ausführungsform;
- Figur 7:: eine Schnittdarstellung einer Batterie im Bereich von Aufnahmekavitäten gemäß einer siebten Ausführungsform;
- Figur 8:: eine perspektivische Darstellung eines Batteriegehäuses gemäß einer achten Ausführungsform;
- Figur 9:: eine weitere perspektivische Darstellung des Batteriegehäuses gemäß der achten Ausführungsform, und
- Figur 10:: eine schematische Darstellung eines Batteriesystem gemäß einer neunten Ausführungsform.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

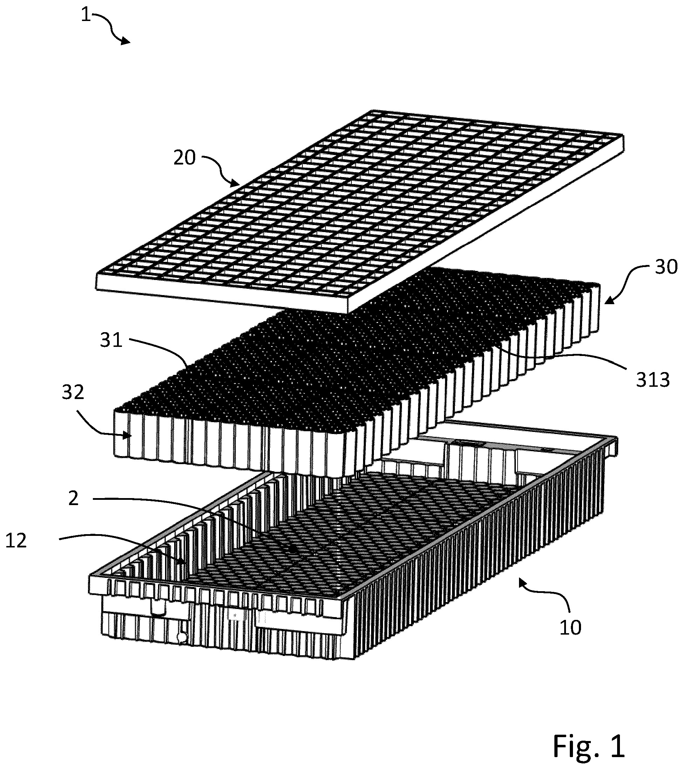

Figur 1 zeigt eine Explosionsdarstellung eines Batteriegehäuses 1 gemäß einer ersten Ausführungsform. Das Batteriegehäuse 1 weist eine erste Batteriegehäusekomponente 10, eine zweite Batteriegehäusekomponente 20 und einen Batteriekomponentenhalter 30 auf, wobei der Batteriekomponentenhalter 30 eine Vielzahl von Aufnahmekavitäten 31 aufweist. Die Aufnahmekavitäten 31 weisen jeweils eine Innenwandung 311 auf, die sich jeweils von einer in Figur 1 nicht dargestellten ersten Öffnung 312 der jeweiligen Aufnahmekavität 31 zu einer zweiten Öffnung 313 erstreckt.

Im zusammengebauten Zustand des Batteriegehäuses 1 ist der zumindest eine Batteriekomponentenhalter 30 sandwichartig derart zwischen der ersten Batteriegehäusekomponente 10 und der zweiten Batteriegehäusekomponente 20 angeordnet und mit diesen jeweils verbunden, dass die jeweiligen in Figur 1 nicht dargestellten ersten Öffnungen 312 jeweils der ersten Batteriegehäusekomponente 10 und die jeweiligen zweiten Öffnungen 313 jeweils der zweiten Batteriegehäusekomponente 20 zugewandt sind. Somit ist der Batteriekomponentenhalter 30 in einem durch die erste Batteriegehäusekomponente 10 und die zweite Batteriegehäusekomponente 20 gebildeten Aufnahmevolumen 2 des Batteriegehäuses 1 aufgenommen. In Einbaulage des Batteriegehäuses 1, beispielsweise in ein Kraftfahrzeug, ist ausgehend von einem Untergrund, beispielsweise einer Straße, zunächst die erste Batteriegehäusekomponente 10, darauffolgend der Batteriekomponentenhalter 30 und schließlich die zweite Batteriegehäusekomponente 20 entlang einer vertikalen Richtung angeordnet.

Die erste Batteriegehäusekomponente 10 weist eine umlaufende Innenwandkontur 12 auf, die einer Außenwandkontur 32 des zumindest einen Batteriekomponentenhalters 30 entspricht. In zusammengebauten Zustand des Batteriegehäuses 1, ist der zumindest eine Batteriekomponentenhalter 30 mit der ersten Batteriegehäusekomponente 10 derart verbunden, dass sich die Außenwandkontur 32 des zumindest einen Batteriekomponentenhalters 30 an die Innenwandkontur 12 der ersten Batteriegehäusekomponente 10 anschmiegt. Mit anderen Worten bildet die Außenwandkontur 32 des Batteriekomponentenhalters 30 mit der Innenwandkontur 12 der ersten Batteriegehäusekomponente 10 eine formschlüssige Verbindung.

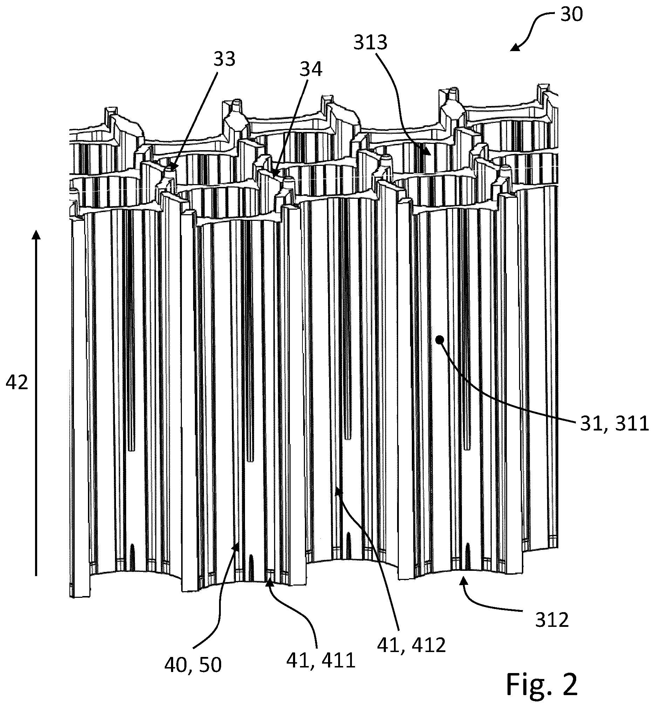

Figur 2 zeigt eine Schnittdarstellung eines Batteriekomponentenhalters 30 eines Batteriegehäuses 1 im Bereich einer Aufnahmekavität 31 gemäß einer zweiten Ausführungsform. Die Innenwandung 311 der Aufnahmekavität 31 weist zumindest eine sich von der ersten Öffnung 312 zur zweiten Öffnung 313 erstreckende Nut 40 auf, sodass bei in die Aufnahmekavität 31 eingesetzter Batteriekomponenten 3 jeweils ein sich von der ersten Öffnung 312 der Aufnahmekavität 31 zur zweiten Öffnung 313 der Aufnahmekavität 31 erstreckender Kühlfluidkanal 50 gebildet ist, der von der Nut 40 und der in Figur 2 nicht gezeigten Batteriekomponente 3 beschränkt ist.

Die Aufnahmekavitäten 31 sind als Durchgangsöffnungen im Batteriekomponentenhalter 30 ausgebildet. Die Aufnahmekavitäten 31 weisen einen kreisförmigen freien Querschnitt auf. Mit anderen Worten sind die Aufnahmekavitäten 31 hohlzylinderförmig ausgebildet.

Die zumindest eine Nut 40 weist entlang ihrer Längserstreckung 42 eine variierende Nuttiefe 41 auf, wobei die zumindest eine Nut 40 im Bereich der ersten Öffnung 312 der Aufnahmekavität 31 eine erste Nuttiefe 411 aufweist, die kleiner ist als eine zweite Nuttiefe 412 im Bereich der zweiten Öffnung 313 der Aufnahmekavität 31. Die Nuttiefe 41 geht von einer ersten Nuttiefe 411 im Bereich der ersten Öffnung 312 kontinuierlich zu einer zweiten Nuttiefe 412 im Bereich der zweiten Öffnung 313 über.

Die Nuttiefe 41 der zumindest einen Nut 40 ist die Erstreckung der Nut 40 in radialer Richtung ausgehend von einem Mittelpunkt der ersten Öffnung 312 und/oder von einem Mittelpunkt der zweiten Öffnung 313 der Aufnahmekavität 31.

Die zumindest eine Nut 40 weist eine über die Längserstreckung 42 der Nut 40 konstante Nutbreite 43 auf. Die Nutbreite 43 erstreckt sich orthogonal zur Längserstreckung 42 der Nut 40 und orthogonal zur Nuttiefe 41 der Nut 40.

Der Batteriekomponentenhalter 30 weist eine Vielzahl von Vorsprüngen 33 auf, die jeweils aus einer Stirnfläche 34 des Batteriekomponentenhalters 30 vorragen. Die Vorsprünge 33 sind zylinderförmig ausgebildet. Die Vorsprünge 33 sind dazu ausgebildet, eine formschlüssige und/oder kraftschlüssige Verbindung zwischen dem Batteriekomponentenhalter 30 und der ersten Batteriegehäusekomponente 10 und/oder der zweiten Batteriegehäusekomponente 20 zu erzeugen.

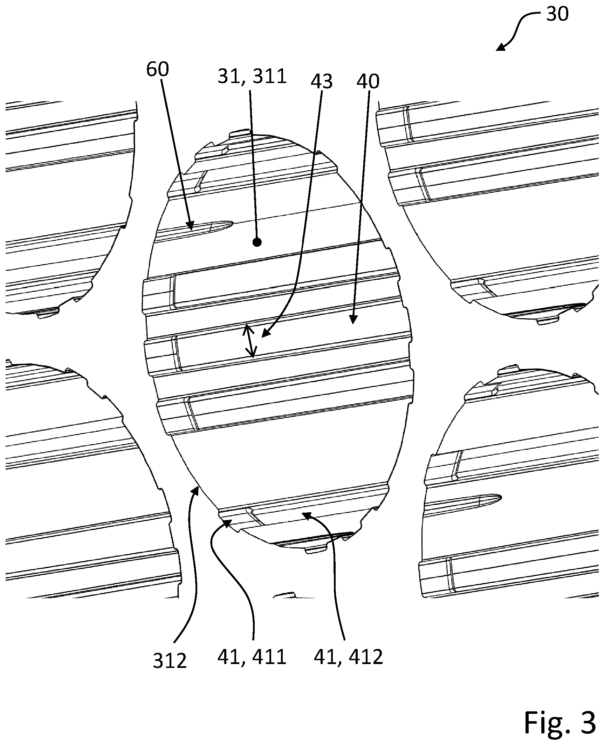

Figur 3 zeigt eine perspektivische Darstellung eines Batteriekomponentenhalters 30 eines Batteriegehäuses 1 im Bereich einer Aufnahmekavität 31 gemäß einer dritten Ausführungsform. Die Nuttiefe 41 variiert entlang der Längserstreckung 42 der Nut 40 stufenweise von einer ersten Nuttiefe 411 im Bereich der ersten Öffnung 312 der Aufnahmekavität 31 zu einer zweiten Nuttiefe 412 im Bereich der zweiten Öffnung 313 der Aufnahmekavität 31.

Die Innenwandungen 311 der jeweiligen Aufnahmekavitäten 31 weisen jeweils eine sich von der ersten Öffnung 312 in Richtung der zweiten Öffnung 313 erstreckende Quetschrippe 60 auf, so dass bei in die Aufnahmekavität 31 eingesetzter Batteriekomponente 3 die Quetschrippe 60 deformiert wird, und die Batteriekomponente 3 spielfrei in der Aufnahmekavität 31 gehalten ist. Die Quetschrippe 60 ist monolithisch mit der Innenwandung 311 der Aufnahmekavität 31 verbunden.

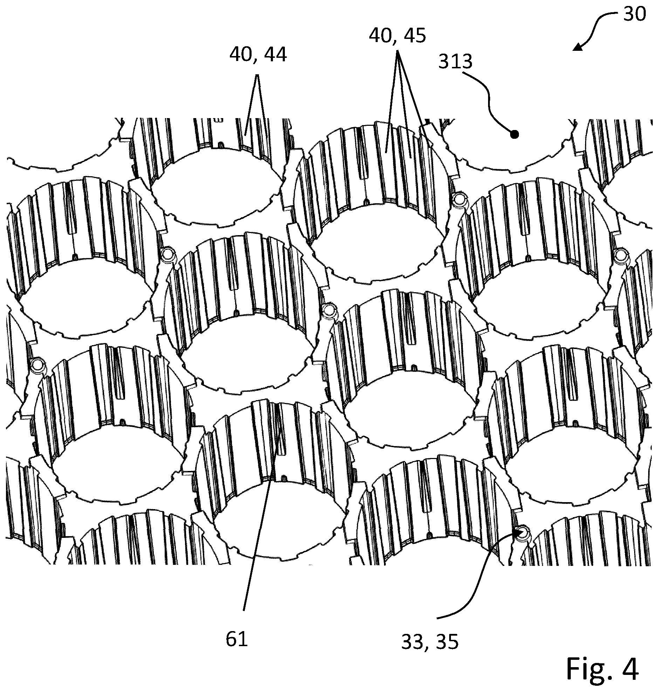

Figur 4 zeigt einen Batteriekomponentenhalter 30 eines Batteriegehäuses 1 gemäß einer vierten Ausführungsform in einer Draufsicht auf die jeweils zweiten Öffnungen 313 der Aufnahmekavitäten 31. Der Batteriekomponentenhalter weist eine Vielzahl von Vorsprüngen 33 auf, die von einer Stirnfläche 34 des Batteriekomponentenhalters 30 vorragen und mit dem Batteriekomponentenhalter 30 monolithisch verbunden sind. Die Vorsprünge 33 sind als zylinderförmiger Zapfen 35 ausgebildet, wobei der Zapfen 35 im oberen Bereich des Zapfens 35 konisch zuläuft. Der Zapfen 35 ist dazu ausgebildet in einer in Figur 4 nicht dargestellten zu dem Zapfen 35 korrespondierenden Aufnahmenut aufgenommen zu werden und eine Klemmverbindung zwischen dem Zapfen 35 und der Aufnahmenut auszubilden. Die in Figur 4 nicht dargestellte Aufnahmenut ist in der zweiten Batteriegehäusekomponente 20 angeordnet und monolithisch mit der zweiten Batteriegehäusekomponente 20 verbunden.

Die Innenwandungen 311 der jeweiligen Aufnahmekavitäten 31 des Batteriekomponentenhalters 30 weisen gruppiert zueinander angeordnete Nuten 40 auf. Einige Innenwandungen 311 einiger Aufnahmekavitäten 31 des Batteriekomponentenhalters 30 weisen in Zweiergruppen 44 zueinander gruppierte Nuten 40 auf. Einige Innenwandungen 311 einiger anderer Aufnahmekavitäten 31 des Batteriekomponentenhalters 30 weisen in Dreiergruppen 45 zueinander gruppierte Nuten 40 auf.

Die Innenwandungen 311 der jeweiligen Aufnahmekavitäten 31 weisen jeweils zumindest eine sich von der zweiten Öffnung 313 in Richtung der ersten Öffnung 312 erstreckende Stabilisatorrippe 61 auf. Es ist möglich, dass die Stabilisatorippe 61 entlang ihrer Längserstreckung beginnend bei der zweiten Öffnung 313 in Richtung der ersten Öffnung 312 eine abnehmende Höhenerstreckung auf.

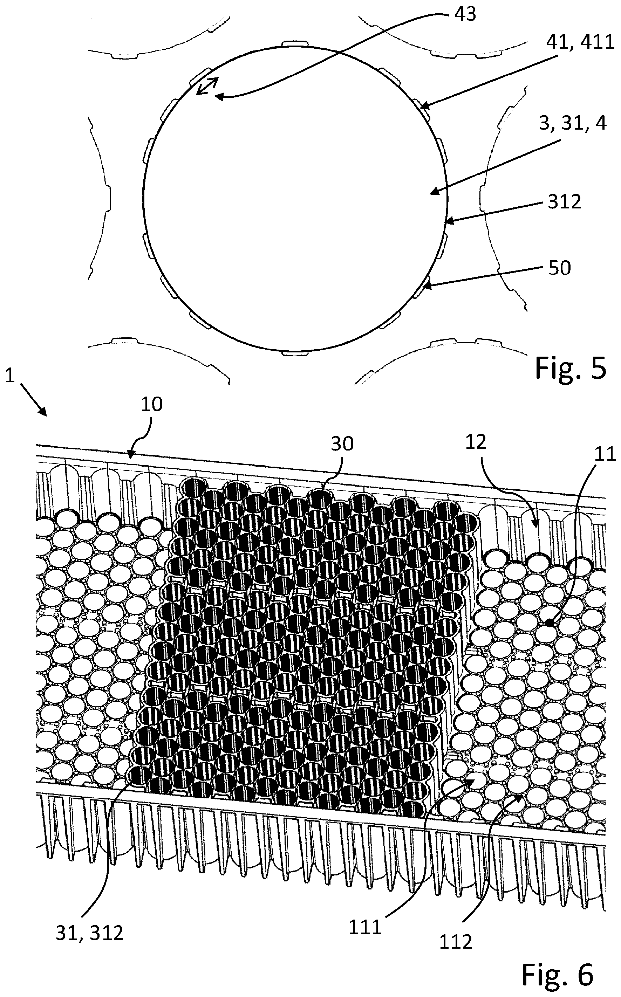

Figur 5 zeigt einen Batteriekomponentenhalter 30 eines Batteriegehäuses 1 im Bereich einer Aufnahmekavität 31 gemäß einer fünften Ausführungsform in einer Draufsicht auf die erste Öffnung 312 der Aufnahmekavität 31. Die Innenwandung 311 der Aufnahmekavität 31 weist vier sich von der ersten Öffnung 312 in Richtung der zweiten Öffnung 313 erstreckende Quetschrippen 60 auf, die jeweils monolithisch mit der Innenwandung 311 verbunden sind. Die Quetschrippen 60 weisen einen äquidistanten Abstand zueinander auf.

Die jeweiligen Nuten 40 weisen eine erste Nuttiefe 411 im Bereich der ersten Öffnung 312 der Aufnahmekavität 31 auf. Die Nuten 40 weisen eine entlang der Längserstreckung 42 der Nut 40 konstante Nutbreite 43 auf.

Figur 6 zeigt eine perspektivische Darstellung eines in eine erste Batteriegehäusekomponente 10 eingesetzten Batteriekomponentenhalters 30 eines Batteriegehäuses 1 gemäß einer sechsten Ausführungsform. Die erste Batteriegehäusekomponente 10 weist eine strukturierte Innenauflagefläche 11 mit einer Vielzahl von Erhebungen 111 auf, wobei die Vielzahl der Erhebungen 111 der Vielzahl der ersten Öffnungen 312 der jeweiligen Aufnahmekavitäten 31 des zumindest einen Batteriekomponentenhalters 30 gegenüberliegend angeordnet sind, so dass bei in die Aufnahmekavitäten 31 eingesetzten Batteriekomponenten 3 die Batteriekomponenten 3 auf den jeweiligen Erhebungen 111 aufliegen. Die Erhebungen 111 sind zylinderförmig ausgebildet und weisen einen geringeren Durchmesser als die Aufnahmekavitäten 31 des Batteriekomponentenhalters 30 auf.

Die strukturierte Innenauflagefläche 11 der ersten Batteriekomponente 10 weist eine Vielzahl von Verbindungserhebungen 112 auf, die sich von der Innenauflagefläche 11 der ersten Batteriegehäusekomponente 10 in das Aufnahmevolumen 2 des Batteriegehäuses 1 erstrecken. Die Verbindungserhebungen 112 sind zylinderförmig ausgebildet und jeweils an drei Erhebungen 111 angrenzend angeordnet.

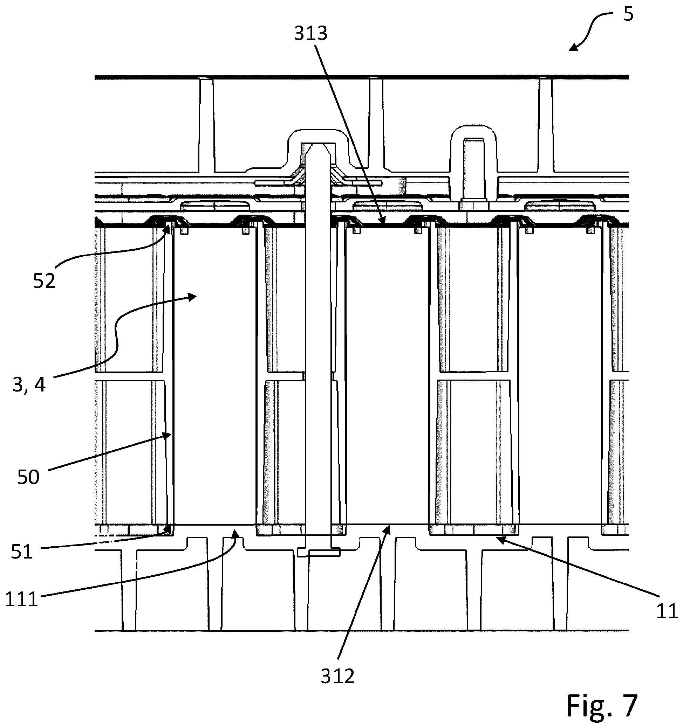

Figur 7 zeigt eine Schnittdarstellung einer Batterie 5 im Bereich von Aufnahmekavitäten 31 gemäß einer siebten Ausführungsform. In den Aufnahmekavitäten 31 des Batteriekomponentenhalters 30 sind eine Vielzahl von als Batteriezellen 4 ausgebildeter Batteriekomponenten 3 eingesetzt. Die Batteriezellen 4 liegen auf den Erhebungen 111 der Innenauflagefläche 11 der ersten Batteriegehäusekomponente 10 auf. Der Batteriekomponentenhalter 30 ist mit den Verbindungserhebungen 112 der Innenauflagefläche 11 der ersten Batteriegehäusekomponente 10 stoffschlüssig verbunden.

Die in die Aufnahmekavitäten 31 des Batteriekomponentenhalters 30 eingesetzten Batteriezellen 4 bilden mit den jeweiligen Nuten 40 der jeweiligen Aufnahmekavitäten 31, in welche die Batteriezellen 4 eingesetzt sind, Kühlfluidkanäle 50. Die Kühfluidkanäle 50 erstrecken sich von den jeweiligen ersten Öffnungen 312 der Aufnahmekavitäten 31 zu den jeweiligen zweiten Öffnungen 313 der jeweiligen Aufnahmekavitäten 31 und sind jeweils von den jeweiligen Nuten 40 und den in die Aufnahmekavitäten 31 eingesetzten Batteriezellen 4 beschränkt.

Die Kühlfluidkanäle 50 weisen jeweils eine Einlassöffnung 51 im Bereich der ersten Öffnung 312 der Aufnahmekavität 31 auf und eine Auslassöffnung 52 im Bereich der zweiten Öffnung 313 der Aufnahmekavität 31.

Im Betrieb einer Batterie 5 gemäß der siebten Ausführungsform liegt in Figur 7 nicht dargestelltes flüssiges Kühlfluid zwischen den Erhebungen 111 der Innenauflagefläche 11 der ersten Batteriekomponente 10 in einem Reservoir in einem Zustand in der Nähe der Siedelinie des Kühlfluids vor. Das Kühlfluid steigt durch den im Kühlfluid vorliegenden Druck durch die Einlassöffnungen 51 des Kühlfluidkanals 50 in den Kühlfluidkanal 50 entgegen der Schwerkraft auf und nimmt dabei Wärme von den Batteriezellen 4 auf. Durch die aufgenommene Wärme beginnt das Kühlfluid zu Sieden und verdampft. Das verdampfende Kühlfluid steigt weiter entlang des Kühlfluidkanals 50 auf und nimmt dabei Wärme von der Batteriezelle 4 auf und tritt aus der Auslassöffnung 52 des Kühlfluidkanals 50 mit einem Dampfgehalt im Bereich von 50% aus.

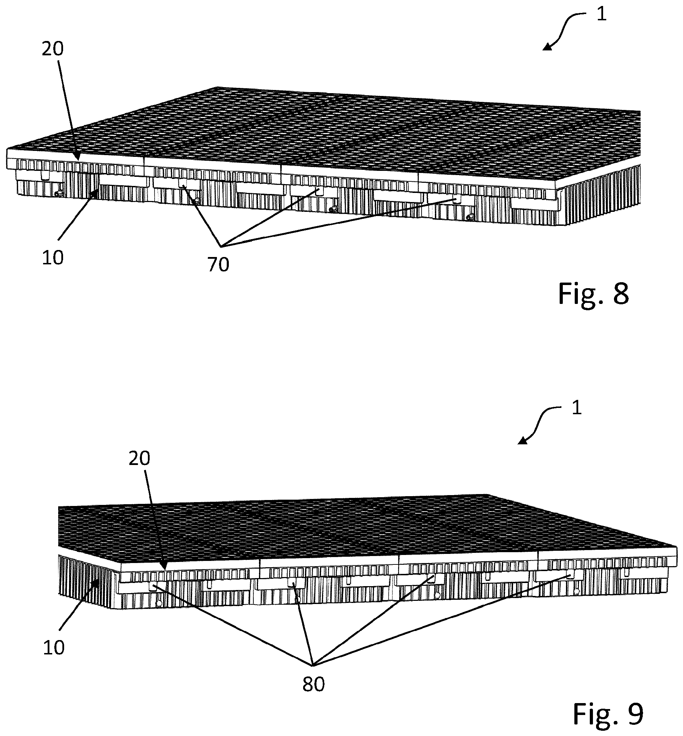

Figur 8 zeigt eine perspektivische Darstellung eines Batteriegehäuses 1 gemäß einer achten Ausführungsform. Das Batteriegehäuse 1 weist vier Kühlfluidzuläufe 70 zum Zuführen eines Kühlfluids in ein Aufnahmevolumen 2 des Batteriegehäuses 1 auf, wobei die vier Kühlfluidzuläufe 70 mit den jeweiligen ersten Öffnungen 312 des zumindest einen Batteriekomponentenhalters 30 in Fluidverbindung stehen. Die Kühlfluidzuläufe 70 ist in der ersten Batteriegehäusekomponente 10 ausgebildet. Die Kühlfluidzuläufe 70 sind im unteren Bereich der ersten Batteriegehäusekomponente 10 angeordnet.

Figur 9 zeigt eine weitere perspektivische Darstellung des Batteriegehäuses 1 gemäß der achten Ausführungsform. Das Batteriegehäuse 1 weist drei Kühlfluidabläufe 80 zum Ausführen des Kühlfluids aus dem Aufnahmevolumen 2 des Batteriegehäuses 1 auf, wobei die Kühlfluidabläufe 80 mit den jeweiligen zweiten Öffnungen 313 des zumindest einen Batteriekomponentenhalters 30 in Fluidverbindung stehen. Die Kühlfluidabläufe 80 sind in der ersten Batteriegehäusekomponente 10 ausgebildet. Die Kühlfluidabläufe 80 sind im oberen Bereich der ersten Batteriegehäusekomponente 10 angeordnet.

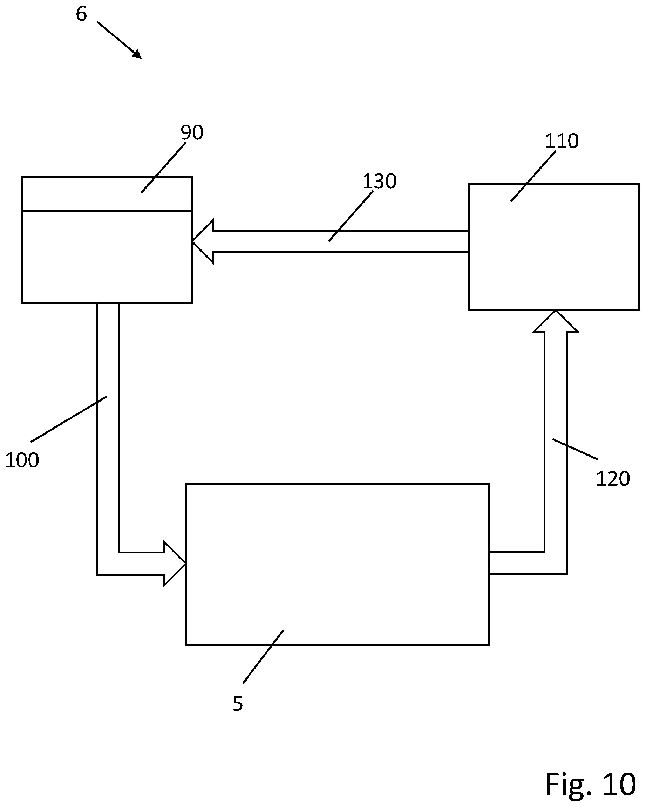

Figur 10 zeigt eine schematische Darstellung eines Batteriesystems 6 gemäß einer neunten Ausführungsform. Das Batteriesystem 6 weist eine Batterie 5 mit einem Batteriegehäuse 1 gemäß der achten Ausführungsform und mit einer Vielzahl von als Batteriezellen 4 ausgebildeter Batteriekomponenten 3, die in den Aufnahmekavitäten 31 des zumindest einen Batteriekomponentenhalters 30 eingesetzt sind. Das Batteriesystem 6 weist ferner einen Kühlfluidvorratsbehälter 90 auf, wobei der Kühlfluidvorratsbehälter 90 mit dem zumindest einen Kühlfluidzulauf 70 des Batteriegehäuses 1 über eine Fluidzulaufleitung 100 zum Zuführen von Kühlfluid in das Aufnahmevolumen 2 des Batteriegehäuses 1 fluidverbunden ist. Schließlich weist das Batteriesystem 6 eine Wärmetauschereinrichtung 110 auf, wobei die Wärmetauschereinrichtung 110 mittels einer Fluidablaufleitung 120 zum Ausführen des Kühlfluids aus dem Aufnahmevolumen 2 des Batteriegehäuses mit dem zumindest einen Kühlfluidablauf 80 fluidverbunden ist, wobei die Wärmetauschereinrichtung 120 mittels einer Vorratsfluidzulaufleitung 130 mit dem Kühlfluidvorratsbehälter 90 zum Zuführen von flüssigem Kühlfluid fluidverbunden ist.

### Bezugszeichenliste

- 1: Batteriegehäuse
- 2: Aufnahmevolumen (des Batteriegehäuses)
- 3: Batteriekomponenten
- 4: Batteriezellen
- 5: Batterie
- 6: Batteriesystem
- 10: Erste Batteriegehäusekomponente
- 11: Innenauflagefläche (der ersten Batteriegehäusekomponente)
- 111: Erhebung (der Innenauflagefläche)
- 112: Verbindungserhebungen (der Innenauflagefläche)
- 12: Innenwandkontur (der ersten Batteriegehäusekomponente)
- 20: Zweite Batteriegehäusekomponente
- 30: Batteriekomponentenhalter
- 31: Aufnahmekavität
- 311: Innenwandung
- 312: Erste Öffnung
- 313: Zweite Öffnung
- 32: Außenwandkontur (des Batteriekomponentenhalters)
- 33: Vorsprung (des Batteriekomponentenhalters)
- 34: Stirnfläche (des Batteriekomponentenhalters)
- 35: Zapfen
- 40: Nut
- 41: Nuttiefe
- 411: Erste Nuttiefe
- 412: Zweite Nuttiefe
- 42: Längserstreckung (der Nut)
- 43: Nutbreite
- 44: Zweiergruppe (von Nuten)
- 45: Dreiergruppe (von Nuten)
- 50: Kühlfluidkanal
- 51: Einlassöffnung (des Kühlfluidkanals)
- 52: Auslassöffnung (des Kühlfluidkanals)
- 60: Quetschrippe
- 61: Stabilisatorrippe
- 70: Kühlfluidzulauf
- 80: Kühlfluidablauf
- 90: Kühlfluidvorratsbehälter
- 100: Fluidzulaufleitung
- 110: Wärmetauschereinrichtung
- 120: Fluidablaufleitung
- 130: Vorratsfluidzulaufleitung

## Patentansprüche

1. Batteriegehäuse (1) zur Aufnahme von einer Vielzahl von Batteriekomponenten (3, 4), aufweisend
- eine erste Batteriegehäusekomponente (10);
- eine zweite Batteriegehäusekomponente (20); und
- zumindest einen Batteriekomponentenhalter (30), der eine Vielzahl von Aufnahmekavitäten (31) zur Aufnahme der Batteriekomponenten (3, 4) aufweist,
- wobei die Aufnahmekavitäten (31) jeweils eine Innenwandung (311) aufweisen, die sich jeweils von einer ersten Öffnung (312) der jeweiligen Aufnahmekavität (31) zu einer zweiten Öffnung (313) der jeweiligen Aufnahmekavität (31) erstreckt, und
- wobei der zumindest eine Batteriekomponentenhalter (30) sandwichartig derart zwischen der ersten Batteriegehäusekomponente (10) und der zweiten Batteriegehäusekomponente (20) angeordnet und mit diesen jeweils verbunden ist, dass die jeweiligen ersten Öffnungen (312) jeweils der ersten Batteriegehäusekomponente (10) und die jeweiligen zweiten Öffnungen (313) jeweils der zweiten Batteriegehäusekomponente (20) zugewandt sind,
wobei das Batteriegehäuse (1) durch folgendes Merkmal **gekennzeichnet** ist:
- die Innenwandungen (311) der jeweiligen Aufnahmekavitäten (31) weisen jeweils zumindest eine sich von der ersten Öffnung (312) zur zweiten Öffnung (313) erstreckende Nut (40) auf, so dass bei in die Aufnahmekavität (31) eingesetzter Batteriekomponente (3, 4) jeweils ein sich von der ersten Öffnung (312) der Aufnahmekavität (31) zur zweiten Öffnung (313) der Aufnahmekavität (31) erstreckender Kühlfluidkanal (50) gebildet ist, der von der Nut (40) und der Batteriekomponente (3, 4) beschränkt ist.

2. Batteriegehäuse (1) nach Anspruch 1, **dadurch gekennzeichnet, dass** die zumindest eine Nut (40) entlang ihrer Längserstreckung (42) eine variierende Nuttiefe (41) aufweist.

3. Batteriegehäuse (1) nach Anspruch 2, **dadurch gekennzeichnet, dass** die Nuttiefe (41) der zumindest einen Nut (40) entlang deren Längserstreckung (42) stufenweise variiert.

4. Batteriegehäuse (1) nach Anspruch 2 oder 3, **dadurch gekennzeichnet, dass** die zumindest eine Nut (40) im Bereich der ersten Öffnung (312) der Aufnahmekavität (31) eine erste Nuttiefe (411) aufweist, die kleiner ist als eine zweite Nuttiefe (412) im Bereich der zweiten Öffnung (313) der Aufnahmekavität (31).

5. Batteriegehäuse (1) nach Anspruch 4, **dadurch gekennzeichnet, dass** die erste Nuttiefe (411) zwischen 0.1 mm und 1 mm, vorzugsweise 0.3 mm beträgt, und dass die zweite Nuttiefe (412) zwischen 0.5 mm und 2 mm, vorzugsweise 0.8 mm beträgt.

6. Batteriegehäuse (1) nach Anspruch 4 oder 5, **dadurch gekennzeichnet, dass** die zumindest eine Nut (40) die erste Nuttiefe (411) über eine Längserstreckung von 1 mm bis 8 mm, vorzugsweise von 2 mm aufweist.

7. Batteriegehäuse (1) nach einem der vorhergehenden Ansprüche, **dadurch gekennzeichnet, dass** die Innenwandungen (311) der jeweiligen Aufnahmekavitäten (31) jeweils zumindest eine sich von der ersten Öffnung (312) in Richtung der zweiten Öffnung (313) erstreckende Quetschrippe (60) aufweisen, so dass bei in die Aufnahmekavität (31) eingesetzter Batteriekomponente (3, 4) die Quetschrippe (60) deformiert wird und die Batteriekomponente (3, 4) spielfrei in der Aufnahmekavität (31) gehalten ist.

8. Batteriegehäuse (1) nach Anspruch 8, **dadurch gekennzeichnet, dass** sich die zumindest eine Quetschrippe (60) von der ersten Öffnung (312) der Aufnahmekavität (31) über eine Länge von 5 mm bis 15 mm, vorzugsweise von 7 mm in Richtung der zweiten Öffnung (313) der Aufnahmekavität (31) erstreckt.

9. Batteriegehäuse (1) nach Anspruch 7 oder 8, **dadurch gekennzeichnet, dass** die zumindest eine Quetschrippe (60) jeweils eine Höhenerstreckung von 0.1 mm bis 0.5 mm, vorzugsweise von 0.3 mm aufweist.

10. Batteriegehäuse (1) nach einem der vorhergehenden Ansprüche, **gekennzeichnet durch** folgende Merkmale:
- die erste Batteriegehäusekomponente (10) weist eine strukturierte Innenauflagefläche (11) mit einer Vielzahl von Erhebungen (111) auf; und
- die Vielzahl der Erhebungen (111) sind der Vielzahl der ersten Öffnungen (312) der jeweiligen Aufnahmekavitäten (31) des zumindest einen Batteriekomponentenhalters (30) gegenüberliegend angeordnet, so dass bei in die Aufnahmekavitäten (31) eingesetzten Batteriekomponenten (3, 4) diese auf den jeweiligen Erhebungen (111) aufliegen.

11. Batteriegehäuse (1) nach einem der vorhergehenden Ansprüche, **gekennzeichnet durch** folgende Merkmale:
- die erste Batteriegehäusekomponente (10) weist eine umlaufende Innenwandkontur (12) auf, die einer Außenwandkontur (32) des zumindest einen Batteriekomponentenhalters (30) entspricht; und
- der zumindest eine Batteriekomponentenhalter (30) ist mit der ersten Batteriegehäusekomponente (10) derart verbunden, dass sich die Außenwandkontur (32) des zumindest einen Batteriekomponentenhalters (30) an die Innenwandkontur (12) der ersten Batteriegehäusekomponente (10) anschmiegt.

12. Batteriegehäuse (1) nach einem der vorhergehenden Ansprüche, **gekennzeichnet durch** die folgenden Merkmale:
- das Batteriegehäuse (1) weist zumindest einen Kühlfluidzulauf (70) zum Zuführen eines Kühlfluids in ein Aufnahmevolumen (2) des Batteriegehäuses (1) auf;
- das Batteriegehäuse (1) weist zumindest einen Kühlfluidablauf (80) zum Ausführen des Kühlfluids aus dem Aufnahmevolumen (2) des Batteriegehäuses (1) auf;
- der zumindest eine Kühlfluidzulauf (70) steht mit den jeweiligen ersten Öffnungen (312) des zumindest einen Batteriekomponentenhalters (30) in Fluidverbindung; und
- der zumindest eine Kühlfluidablauf (80) steht mit den jeweiligen zweiten Öffnungen (313) des zumindest einen Batteriekomponentenhalters (30) in Fluidverbindung.

13. Batteriegehäuse (1) nach Anspruch 12, **dadurch gekennzeichnet, dass** der zumindest eine Kühlfluidzulauf (70) und/oder der zumindest eine Kühlfluidablauf (80) in der ersten Batteriegehäusekomponente (10) ausgebildet ist/sind.

14. Batterie (5) mit einem Batteriegehäuse (1) nach einem der vorhergehenden Ansprüchen und mit einer Vielzahl von als Batteriezellen (4) und/oder als Batteriemodule ausgebildeter Batteriekomponenten (3, 4), die in den Aufnahmekavitäten (31) des zumindest einen Batteriekomponentenhalters (30) eingesetzt sind.

15. Batteriesystem (6), aufweisend:
- eine Batterie (5) mit einem Batteriegehäuse (1) nach Anspruch 12 und mit einer Vielzahl von als Batteriezellen (4) und/oder als Batteriemodule ausgebildeter Batteriekomponenten (3, 4), die in den Aufnahmekavitäten (31) des zumindest einen Batteriekomponentenhalters (30) eingesetzt sind;
- ein Kühlfluidvorratsbehälter (90), der mit dem zumindest einen Kühlfluidzulauf (70) über eine Fluidzulaufleitung (100) zum Zuführen von Kühlfluid in das Aufnahmevolumen (2) des Batteriegehäuses (1) fluidverbunden ist; und
- eine Wärmetauschereinrichtung (110), die mittels einer Fluidablaufleitung (120) zum Ausführen des Kühlfluids aus dem Aufnahmevolumen (2) des Batteriegehäuses (1) mit dem zumindest einen Kühlfluidablauf (80) fluidverbunden ist, wobei die Wärmetauschereinrichtung (110) mit dem Kühlfluidvorratsbehälter (90) zum Zuführen von flüssigem Kühlfluid fluidverbunden ist.

## Claims

1. Battery housing (1) for receiving a plurality of battery components (3, 4), having
- a first battery housing component (10);
- a second battery housing component (20); and
- at least one battery component holder (30) having a plurality of receiving cavities (31) for receiving the battery components (3, 4),
- wherein the receiving cavities (31) each have an inner wall (311) which extends from a first opening (312) of the respective receiving cavity (31) to a second opening (313) of the respective receiving cavity (31), and
- wherein the at least one battery component holder (30) is sandwiched between the first battery housing component (10) and the second battery housing component (20) and is connected to each of them such that the respective first openings (312) each face the first battery housing component (10), and the respective second openings (313) each face the second battery housing component (20),
wherein the battery housing (1) is **characterized by** the following feature:
- the inner walls (311) of the respective receiving cavities (31) each have at least one groove (40) extending from the first opening (312) to the second opening (313), so that, when a battery component (3, 4) is inserted into the receiving cavity (31), a respective cooling fluid channel (50) is formed which extends from the first opening (312) of the receiving cavity (31) to the second opening (313) of the receiving cavity (31) and is delimited by the groove (40) and the battery component (3, 4).

2. Battery housing (1) according to claim 1, **characterized in that** the at least one groove (40) along its longitudinal extension (42) has a varying groove depth (41).

3. Battery housing (1) according to claim 2, **characterized in that** the groove depth (41) of the at least one groove (40) varies stepwise along its longitudinal extension (42).

4. Battery housing (1) according to claim 2 or 3, **characterized in that** the at least one groove (40) in the region of the first opening (312) of the receiving cavity (31) has a first groove depth (411) that is smaller than a second groove depth (412) in the region of the second opening (313) of the receiving cavity (31).

5. Battery housing (1) according to claim 4, **characterized in that** the first groove depth (411) is between 0.1 mm and 1 mm, preferably is 0.3 mm, and **in that** the second groove depth (412) is between 0.5 mm and 2 mm, preferably is 0.8 mm.

6. Battery housing (1) according to claim 4 or 5, **characterized in that** the at least one groove (40) has the first groove depth (411) over a longitudinal extension of 1 mm to 8 mm, preferably over a longitudinal extension of 2 mm.

7. Battery housing (1) according to one of the preceding claims, **characterized in that** the inner walls (311) of the respective receiving cavities (31) each have at least one crush rib (60) extending from the first opening (312) in the direction of the second opening (313), so that, when a battery component (3, 4) is inserted into the receiving cavity (31), the crush rib (60) is deformed, and the battery component (3, 4) is held without play in the receiving cavity (31).

8. Battery housing (1) according to claim 8, **characterized in that** the at least one crush rib (60) extends from the first opening (312) of the receiving cavity (31) over a length of 5 mm to 15 mm, preferably 7 mm, in the direction of the second opening (313) of the receiving cavity (31).

9. Battery housing (1) according to claim 7 or 8, **characterized in that** the at least one crush rib (60) has a height extension of 0.1 mm to 0.5 mm, preferably 0.3 mm.

10. Battery housing (1) according to one of the preceding claims, **characterized by** the following features:
- the first battery housing component (10) has a structured inner support surface (11) with a plurality of protrusions (111); and
- the plurality of protrusions (111) are arranged opposite the plurality of first openings (312) of the respective receiving cavities (31) of the at least one battery component holder (30) so that, when battery components (3, 4) are inserted into the receiving cavities (31), the battery components rest upon the respective protrusions (111).

11. Battery housing (1) according to one of the preceding claims, **characterized by** the following features:
- the first battery housing component (10) has a circumferential inner wall contour (12) that corresponds to an outer wall contour (32) of the at least one battery component holder (30); and
- the at least one battery component holder (30) is connected to the first battery housing component (10) such that the outer wall contour (32) of the at least one battery component holder (30) conforms to the inner wall contour (12) of the first battery housing component (10).

12. Battery housing (1) according to one of the preceding claims, **characterized by** the following features:
- the battery housing (1) has at least one cooling fluid inlet (70) for supplying a cooling fluid to a receiving volume (2) of the battery housing (1);
- the battery housing (1) has at least one cooling fluid outlet (80) for discharging the cooling fluid from the receiving volume (2) of the battery housing (1);
- the at least one cooling fluid inlet (70) is in fluidic connection with the respective first openings (312) of the at least one battery component holder (30); and
- the at least one cooling fluid outlet (80) is in fluidic connection with the respective second openings (313) of the at least one battery component holder (30).

13. Battery housing (1) according to claim 12, **characterized in that** the at least one cooling fluid inlet (70) and/or the at least one cooling fluid outlet (80) is/are formed in the first battery housing component (10).

14. Battery (5) having a battery housing (1) according to one of the preceding claims and having a plurality of battery components (3, 4) designed as battery cells (4) and/or as battery modules and inserted into the receiving cavities (31) of the at least one battery component holder (30).

15. Battery system (6), having:
- a battery (5) with a battery housing (1) according to claim 12 and with a plurality of battery components (3, 4) designed as battery cells (4) and/or as battery modules and inserted into the receiving cavities (31) of the at least one battery component holder (30);
- a cooling fluid storage container (90) which is fluidically connected to the at least one cooling fluid inlet (70) via a fluid inlet line (100) for supplying cooling fluid to the receiving volume (2) of the battery housing (1); and
- a heat exchanger device (110) which is fluidically connected to the at least one cooling fluid outlet (80) by means of a fluid outlet line (120) for discharging the cooling fluid from the receiving volume (2) of the battery housing (1), wherein the heat exchanger device (110) is fluidically connected to the cooling fluid storage container (90) for supplying liquid cooling fluid.

## Revendications

1. Boîtier de batterie (1) pour la réception d'une pluralité de composants de batterie (3, 4), présentant
- un premier composant de boîtier de batterie (10) ;
- un second composant de boîtier de batterie (20) ; et
- au moins un support pour composants de batterie (30) qui présente une pluralité de cavités de réception (31) pour la réception des composants de batterie (3, 4),
- dans lequel les cavités de réception (31) présentent respectivement une paroi intérieure (311) s'étendant respectivement d'une première ouverture (312) de la cavité de réception (31) respective à une seconde ouverture (313) de la cavité de réception (31) respective, et
- dans lequel l'au moins un support pour composants de batterie (30) est pris en sandwich entre le premier composant de boîtier de batterie (10) et le second composant de boîtier de batterie (20) et est relié à ceux-ci respectivement de telle sorte que les premières ouvertures (312) respectives sont respectivement tournées vers le premier composant de boîtier de batterie (10) et les secondes ouvertures (313) respectives sont respectivement tournées vers le second composant de boîtier de batterie (20),
dans lequel le boîtier de batterie (1) est **caractérisé par** les caractéristiques suivantes :
- les parois intérieures (311) des cavités de réception (31) respectives présentent respectivement au moins une rainure (40) s'étendant de la première ouverture (312) à la seconde ouverture (313) de sorte que, lorsque le composant de batterie (3, 4) est inséré dans la cavité de réception (31), respectivement un canal de fluide de refroidissement (50) s'étendant de la première ouverture (312) de la cavité de réception (31) à la seconde ouverture (313) de la cavité de réception (31) est formé, lequel canal de fluide de refroidissement est limité par la rainure (40) et le composant de batterie (3, 4).

2. Boîtier de batterie (1) selon la revendication 1, **caractérisé en ce que** l'au moins une rainure (40) présente une profondeur de rainure (41) variable le long de son extension longitudinale (42).

3. Boîtier de batterie (1) selon la revendication 2, **caractérisé en ce que** la profondeur de rainure (41) de l'au moins une rainure (40) varie par paliers le long de son extension longitudinale (42).

4. Boîtier de batterie (1) selon la revendication 2 ou 3,
**caractérisé en ce que** l'au moins une rainure (40) présente, dans la zone de la première ouverture (312) de la cavité de réception (31), une première profondeur de rainure (411) qui est inférieure à une seconde profondeur de rainure (412) dans la zone de la seconde ouverture (313) de la cavité de réception (31).

5. Boîtier de batterie (1) selon la revendication 4, **caractérisé en ce que** la première profondeur de rainure (411) est comprise entre 0,1 mm et 1 mm, de préférence est de 0,3 mm, et **en ce que** la seconde profondeur de rainure (412) est comprise entre 0,5 mm et 2 mm, de préférence est de 0,8 mm.

6. Boîtier de batterie (1) selon la revendication 4 ou 5,
**caractérisé en ce que** l'au moins une rainure (40) présente la première profondeur de rainure (411) sur une extension longitudinale de 1 mm à 8 mm, de préférence de 2 mm.

7. Boîtier de batterie (1) selon l'une des revendications précédentes, **caractérisé en ce que** les parois intérieures (311) des cavités de réception (31) respectives présentent respectivement au moins une nervure d'écrasement (60) s'étendant de la première ouverture (312) dans la direction de la seconde ouverture (313) de sorte que, lorsque le composant de batterie (3, 4) est inséré dans la cavité de réception (31), la nervure d'écrasement (60) est déformée et le composant de batterie (3, 4) est maintenu sans jeu dans la cavité de réception (31).

8. Boîtier de batterie (1) selon la revendication 8, **caractérisé en ce que** l'au moins une nervure d'écrasement (60) s'étend de la première ouverture (312) de la cavité de réception (31) sur une longueur de 5 mm à 15 mm, de préférence de 7 mm, dans la direction de la seconde ouverture (313) de la cavité de réception (31).

9. Boîtier de batterie (1) selon la revendication 7 ou 8,
**caractérisé en ce que** l'au moins une nervure d'écrasement (60) présente respectivement une extension en hauteur de 0,1 mm à 0,5 mm, de préférence de 0,3 mm.

10. Boîtier de batterie (1) selon l'une des revendications précédentes, **caractérisé par** les caractéristiques suivantes :
- le premier composant de boîtier de batterie (10) présente une surface d'appui intérieure (11) structurée comportant une pluralité de protubérances (111) ; et
- la pluralité de protubérances (111) est disposée en face de la pluralité de premières ouvertures (312) des cavités de réception (31) respectives de l'au moins un support pour composants de batterie (30) de sorte que, lorsque les composants de batterie (3, 4) sont insérés dans les cavités de réception (31), ceux-ci reposent sur les protubérances (111) respectives.

11. Boîtier de batterie (1) selon l'une des revendications précédentes, **caractérisé par** les caractéristiques suivantes :
- le premier composant de boîtier de batterie (10) présente un contour de paroi intérieur (12) circonférentiel qui correspond à un contour de paroi extérieur (32) de l'au moins un support pour composants de batterie (30) ; et
- l'au moins un support pour composants de batterie (30) est relié au premier composant de boîtier de batterie (10) de telle sorte que le contour de paroi extérieur (32) de l'au moins un support pour composants de batterie (30) s'adapte au contour de paroi intérieur (12) du premier composant de boîtier de batterie (10).

12. Boîtier de batterie (1) selon l'une des revendications précédentes, **caractérisé par** les caractéristiques suivantes :
- le boîtier de batterie (1) présente au moins une amenée de fluide de refroidissement (70) pour l'amenée d'un fluide de refroidissement dans un volume de réception (2) du boîtier de batterie (1) ;
- le boîtier de batterie (1) présente au moins une sortie de fluide de refroidissement (80) pour l'évacuation du fluide de refroidissement hors du volume de réception (2) du boîtier de batterie (1) ;
- l'au moins une amenée de fluide de refroidissement (70) est en communication fluidique avec les premières ouvertures (312) respectives de l'au moins un support pour composants de batterie (30) ; et
- l'au moins une sortie de fluide de refroidissement (80) est en communication fluidique avec les secondes ouvertures (313) respectives de l'au moins un support pour composants de batterie (30).

13. Boîtier de batterie (1) selon la revendication 12, **caractérisé en ce que** l'au moins une amenée de fluide de refroidissement (70) et/ou l'au moins une sortie de fluide de refroidissement (80) sont réalisées dans le premier composant de boîtier de batterie (10).

14. Batterie (5) comportant un boîtier de batterie (1) selon l'une des revendications précédentes et comportant une pluralité de composants de batterie (3, 4) réalisés sous forme d'éléments de batterie (4) et/ou sous forme de modules de batterie, lesquels sont insérés dans les cavités de réception (31) de l'au moins un support pour composants de batterie (30).

15. Système à batterie (6), présentant :
- une batterie (5) comportant un boîtier de batterie (1) selon la revendication 12 et comportant une pluralité de composants de batterie (3, 4) réalisés sous forme d'éléments de batterie (4) et/ou sous forme de modules de batterie, lesquels sont insérés dans les cavités de réception (31) de l'au moins un support pour composants de batterie (30) ;
- un réservoir de stockage de fluide de refroidissement (90) en communication fluidique avec l'au moins une amenée de fluide de refroidissement (70) par l'intermédiaire d'une conduite d'amenée de fluide (100) pour l'amenée de fluide de refroidissement dans le volume de réception (2) du boîtier de batterie (1) ; et
- un dispositif d'échange de chaleur (110) en communication fluidique avec l'au moins une sortie de fluide de refroidissement (80) au moyen d'une conduite de sortie de fluide (120) pour l'évacuation du fluide de refroidissement hors du volume de réception (2) du boîtier de batterie (1), dans lequel le dispositif d'échange de chaleur (110) est en communication fluidique avec le réservoir de stockage de fluide de refroidissement (90) pour l'amenée du fluide de refroidissement liquide.
